(19) Europäisches Patentamt
European Patent Office
Office européen des brevets

(11) **EP 4 786 427 A1**

(12) **EUROPÄISCHE PATENTANMELDUNG**

(43) Veröffentlichungstag:
**05.08.2026 Patentblatt 2026/32**

(21) Anmeldenummer: **25154696.6**

(22) Anmeldetag: **29.01.2025**

(51) Internationale Patentklassifikation (IPC):
*C03C 3/087* (2006.01)   *C03C 23/00* (2006.01)

(52) Gemeinsame Patentklassifikation (CPC):
**C03C 3/087; C03C 23/0025**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **SAINT-GOBAIN GLASS FRANCE**
**92400 Courbevoie (FR)**

(72) Erfinder:
• **DWIVEDI, Shubham Dhar**
**52134 Herzogenrath (DE)**
• **MEIER, Johanna Sophie**
**52134 Herzogenrath (DE)**

(74) Vertreter: **Feist, Florian Arno**
**Saint-Gobain Sekurit Deutschland GmbH**
**SGR-Germany, Patentabteilung**
**Glasstraße 1**
**52134 Herzogenrath (DE)**

(54) **VERGLASUNGSELEMENT MIT EINER GLASSCHEIBE MIT INTEGRIERTEM LICHTLEITER**

(57) Die vorliegende Erfindung betrifft ein Verglasungselement, insbesondere für ein Fahrzeug, ein Gebäude, ein elektrisches Gerät oder ein Möbelstück, umfassend eine Glasscheibe (1) aus Kalk-Natron-Glas mit einer ersten Oberfläche (A), einer zweiten Oberfläche (B) und einer dazwischen verlaufenden Seitenkantenfläche (e), wobei in der Glasscheibe (1) ein Lichtleiter (2) ausgebildet ist, der zumindest in einem Abschnitt in der Ebene der Glasscheibe (1) verläuft und dabei von der ersten Oberfläche (A) und der zweiten Oberfläche (B) beabstandet ist und dessen Brechungsindex höher ist als der Brechungsindex des umliegenden Materials der Glasscheibe (1).

Fig. 1

## Beschreibung

Die Erfindung betrifft ein Verglasungselement, insbesondere für ein Fahrzeug, ein Gebäude, ein elektrisches Gerät/Haushaltsgerät oder ein Möbelstück, welches eine Glasscheibe mit einem integrierten Lichtleiter umfasst, sowie dessen Verwendung.

Es sind Verglasungselemente bekannt, welche eine Glasscheibe umfassen, die als Lichtleiter verwendet wird. So sind beispielsweise als Verbundscheibe ausgebildete Fahrzeug-Dachscheiben bekannt, deren Innenscheibe beleuchtet ist. Zur Beleuchtung kann eine Lichtquelle, typischerweise eine Leuchtdiode, derart an der Glasscheibe angebracht werden, dass Licht über in die Glasscheibe eingekoppelt wird und sich dort infolge von Totalreflexion an den Oberflächen der Glasscheibe ausbreitet. Durch lichtstreuende Strukturen kann das Licht wieder aus der Innenscheibe ausgekoppelt werden, um beispielsweise den Fahrzeug-Innenraum zu beleuchten oder ein ästhetisch ansprechendes Muster darzustellen. Lediglich beispielhaft sei auf WO2014060409A1, WO2014167291A1, WO2023169736A1 WO2023237279A1 und WO2023144282A1 verwiesen.

Das sich in der Glasscheibe ausbreitende Licht wird dann an der Oberfläche der Glasscheibe totalreflektiert, wenn es unter einem Winkel auf die Oberfläche trifft (gemessen zur Flächennormalen), welcher größer ist als der Grenzwinkel der Totalreflexion. Dieser Grenzwinkel hängt wiederum von der Differenz der Brechungsindizes von Glasscheibe und daran angrenzendem Medium ab. Je geringer diese Differenz ausgeprägt ist, desto größer ist der Grenzwinkel der Totalreflexion. Bei Verbundscheiben ist eine der Oberflächen der Glasscheibe über eine thermoplastische Zwischenschicht, üblicherweise ausgebildet aus einer PVB-Folie, mit einer weiteren Glasscheibe verbunden. Das angrenzende Medium ist in diesem Fall die thermoplastische Zwischenschicht, welche typischerweise einen sehr ähnlichen Brechungsindex wie die Glasscheibe aufweist. Aus der geringen Differenz resultiert ein größer Grenzwinkel der Totalreflexion und daraus ein sehr eingeschränkter Bereich ein Einfallswinkel, unter denen Licht totalreflektiert wird.

Zudem ist diese Ausgestaltung eines Lichtleiter, bei der das Licht großflächig in die Glasscheibe eingekoppelt wird und die gesamte Glasscheibe als Lichtleiter fungiert, nicht für alle Anwendungen geeignet. Mitunter kann es gewünscht sein, das Licht gerichteter oder konzentrierter durch die Glasscheibe zu leiten.

Es besteht daher Bedarf an verbesserten Verglasungselementen mit integrierten Lichtleitern, welche einfach herstellbar sind, eine hohe Lichtausbeute gewährleisten (insbesondere durch einen vergleichsweise großen Winkelbereich zur Totalreflexion) und für eine Vielzahl von Anwendungen flexibel einsetzbar sind.

Es ist bekannt, dass durch Laserbearbeitung mit Ultrakurzpulsen Lichtleiter in speziellen Glassubstraten ausgebildet werden können, beispielsweise in Scheiben aus Quarzglas, Borosilikatglas und Chalkogenidglas. Die Laserbearbeitung führt zu einer lokalen Erhöhung des Brechungsindex, so dass an der Grenzfläche des Lichtleiters zum umliegenden Material Totalreflexion stattfinden kann. Hierzu sei auf die wissenschaftlichen Übersichtsartikel Jiawei Li et al., Optical Waveguides Fabricated via Femtosecond Direct Laser Writing: Processes, Materials, and Devices, Advanced Material Technologies 8 (2023), auf Rafael R. Gattass, Eric Mazur, Femtosecond laser micromachining intransparent materials, Nature Photonics 2 (2008) und auf George Y. Chen et al., Femtosecond-laser-written Microstructured Waveguides in BK7 Glass, Scientific Reports 8 (2018) verwiesen. Solche sehr reinen und entsprechend kostspielige Glassorten werden aber typischerweise nicht für Verglasungen eingesetzt, allein schon aus Kostengründen.

Der vorliegenden Erfindung liegt die Aufgabe zugrunde, ein verbessertes Verglasungselement mit einem integrierten Lichtleiter bereitzustellen. Das Verglasungselement soll als Fensterscheibe einsetzbar sein, einfach herstellbar sein, für eine Vielzahl von Anwendungen flexibel anwendbar sein und der Lichtleiter soll geringe Verluste gewährleisten.

Die Aufgabe der vorliegenden Erfindung wird gelöst durch ein Verglasungselement gemäß Anspruch 1. Bevorzugte Ausgestaltungen gehen aus den Unteransprüchen hervor.

Das erfindungsgemäße Verglasungselement ist bevorzugt für ein Fahrzeug, ein Gebäude, ein elektrisches Gerät beziehungsweise Haushaltsgerät (beispielsweise einen Kühlschrank oder Ofen) oder ein Möbelstück (beispielsweise einen Schrank) vorgesehen, insbesondere als Fensterscheibe oder Türscheibe, wobei es, eingesetzt in eine Fensteröffnung beziehungsweise Türöffnung, einen Innenraum von einer äußeren Umgebung abgrenzt beziehungsweise abtrennt. Das Verglasungselement umfasst zumindest eine Glasscheibe. Das Verglasungselement kann eine Einzelglasscheibe sein und dabei strukturell nur aus der besagten Glasscheibe bestehen. Das Glaselement kann alternativ beispielsweise eine Verbundscheibe oder Isolierverglasung sein, welche die besagte Glasscheibe enthält.

Die Glasscheibe weist eine erste Oberfläche (Hauptfläche) und eine zweite Oberfläche (Hauptfläche) auf, die typischerweise im Wesentlichen parallel zueinander ausgebildet sind, sowie eine zwischen der ersten und der zweiten Oberfläche verlaufende umlaufende Seitenkantenfläche.

Erfindungsgemäß ist in der Glasscheibe ein Lichtleiter ausgebildet, der zumindest in einem Abschnitt der Glasscheibe in der Ebene der Glasscheibe verläuft und dabei von der ersten und der zweiten Oberfläche der Glasscheibe beabstandet ist. Nicht die gesamte Glasscheibe fungiert also als Lichtleiter, sondern nur ein Bereich im Innern der Glasscheibe. Der Lichtleiter ist also in die Glasscheibe eingelagert. Der Bereich der Glasscheibe, der den Lichtleiter bildet, weist einen höheren Brechungsindex auf als das umliegende (also an den Lichtleiter angrenzende) Material der Glasscheibe. Der Lichtleiter weist also eine Grenzfläche zum umliegenden Material der Glasscheibe auf, an welcher Totalreflexion stattfinden kann, um Licht im Lichtleiter zu leiten.

Der Lichtleiter weist zumindest einen Abschnitt auf, der in der Ebene der Glasscheibe verläuft oder, anders ausgedrückt, sich in der Flächendimension der Glasscheibe erstreckt. Damit ist gemeint, dass in diesem Abschnitt die Erstreckungsrichtung des Lichtleiters, in welcher beim bestimmungsgemäßen Gebrauch das Licht geleitet wird, eine überwiegende Richtungskomponente parallel zur ersten und zweiten Oberfläche der Glasscheibe aufweist. Teilt man die Erstreckungsrichtung in einer Art Richtungsparallelogramm in eine erste Komponente parallel zur ersten und zweiten Oberfläche und eine zweite Komponente senkrecht zur ersten und zweiten Oberfläche auf, so ist die erste Komponente größer als die zweite. In einer bevorzugten Ausgestaltung ist der besagte Abschnitt des Lichtleiters parallel zur ersten und zweiten Oberfläche der Glasscheibe ausgerichtet (erste Richtungskomponente entspricht 100%). Der besagte Abschnitt des Lichtleiters weist zu beiden Oberflächen der Glasscheibe einen Abstand auf. Darauf bezogene Angaben, insbesondere der Abstand des Lichtleiters von der ersten Oberfläche, beziehen sich auf diesen Abschnitt des Lichtleiters.

Das erfindungsgemäße Verglasungselement ist insbesondere dadurch gekennzeichnet, dass die Glasscheibe aus Kalk-Natron-Glas gefertigt ist. Während die Laserbearbeitung von speziellen Glassorten, beispielsweise chemisch sehr reinem Quarzglas, mit Ultrakurzpulsen zur lokalen Erhöhung des Brechungsindex und dadurch Erzeugung eines Lichtleiters bereits bekannt war, herrschte offenbar die Ansicht vor, dass Kalk-Natron-Glas, welches chemisch deutlich unreiner ist, nicht derart bearbeitet werden kann. Die Erfinder haben festgestellt, dass die Ultrakurzpuls-Laserbehandlung auch überraschend auf Kalk-Natron-Glas angewendet werden kann. Kalk-Natron-Glas ist übliches Fensterglas, so dass Verglasungselemente für Fahrzeuge und Gebäude mit dem Lichtleiter versehen werden können, ohne die Produktionskosten allzu sehr zu steigern - es muss nicht auf teurere Glassorten zurückgegriffen werden. Die Laserbearbeitung ist außerdem höchst flexibel und erlaubt die Erzeugung von Lichtleitern in nahezu beliebiger Form. Die Erfindung erlaubt daher die Realisierung einer Vielzahl von Anwendungen in der Praxis. Die Differenz der Brechungsindizes von Lichtleiter und umliegendem Glasmaterial ist ausreichend hoch, so dass eine großer Winkelbereich für die Totalreflexion realisiert wird und das Licht mit hoher Ausbeute geleitet werden kann. Das sind große Vorteile der vorliegenden Erfindung.

Der Lichtleiter weist typischerweise mindestens eine Einkoppelstelle auf, welche dafür geeignet und vorgesehen ist, das Licht einer Lichtquelle in den Lichtleiter einzukoppeln. Der Lichtleiter weist außerdem typischerweise mindestens eine Auskoppelstelle auf, welche dafür geeignet und vorgesehen ist, das Licht wieder aus dem Lichtleiter auszukoppeln.

In bestimmten Ausgestaltungen kann der gesamte Lichtleiter in der Ebene der Glasscheibe verlaufen, insbesondere parallel zur ersten und zweiten Oberfläche der Glasscheibe. In anderen Ausgestaltungen können aber die mindestens eine Einkoppelstelle und die mindestens eine Auskoppelstelle auf der ersten oder der zweiten Oberfläche der Glasscheibe angeordnet sein. In diesen Ausgestaltungen weist der Lichtleiter den Abschnitt in der Ebene der Glasscheibe auf und davon ausgehend einen Zuleitungsabschnitt für jede Einkoppelstelle und jede Auskoppelstelle auf der ersten beziehungsweise zweiten Oberfläche der Glasscheibe, wobei der Zuleitungsabschnitt eine überwiegende Richtungskomponente senkrecht zur ersten und zweiten Oberfläche aufweist, insbesondere senkrecht zur ersten und zweiten Oberfläche verläuft. Der Zuleitungsabschnitt verläuft von dem Abschnitt in der Ebene der Glasscheibe bis zur jeweiligen Ein- beziehungsweise Auskoppelstelle auf der ersten oder zweiten Oberfläche. Bevorzugt und typischerweise macht der Abschnitt in der Ebene der Glasscheibe den überwiegenden Teil des Lichtleiters aus, hat also eine Länge, welche größer ist als die summierte Länge aller Zuleitungsabschnitte.

Der Lichtleiter ist dadurch gekennzeichnet, dass er einen höheren Brechungsindex aufweist als das umliegende Material der Glasscheibe. Der Differenz zwischen dem Brechungsindex des Lichtleiters und dem Brechungsindex des umliegenden Materials beträgt beispielsweise etwa $10^{-2}$. Der Lichtleiter ist bevorzugt durch Laserbearbeitung in der Glasscheibe ausgebildet. Dazu wird die Strahlung eines Lasers auf die Glasscheibe fokussiert, insbesondere auf eine Ebene zwischen der ersten und der zweiten Oberfläche der Glasscheibe, und über die Glasscheibe bewegt. Durch die Laserstrahlung wird gleichsam eine Materialmodifikation des Glases hervorgerufen, wodurch der Brechungsindex erhöht wird. Der Laser wird bevorzugt gepulst betrieben mit sogenannten Ultrakurzpulsen, insbesondere Pulsen mit Pulslängen im Femtosekundenbereich. Die Laserstrahlung weist bevorzugt eine Wellenlänge von 400 nm bis 2000 nm auf, besonders bevorzugt von 500 nm bis 600 nm oder von 1000 nm bis 2000 nm. Grundsätzlich können zur Laserbearbeitung Verfahren verwendet werden, deren Anwendung auf chemisch reinere Glassorten an sich bekannt ist und beispielsweise in dem in der Einleitung zitierten Stand der Technik beschrieben ist.

Der Lichtleiter weist typischerweise einen geringeren Abstand zu einer der Hauptflächen der Glasscheibe auf, verglichen mit der anderen Hauptfläche. Diejenige Hauptfläche, zu der der Lichtleiter einen geringeren Abstand aufweist, wird im Sinne der vorliegenden Erfindung als erste Oberfläche der Glasscheibe bezeichnet. Die zweite Oberfläche ist entsprechend im Sinne der Erfindung diejenige Hauptfläche der Glasscheibe, welche einen größeren Abstand zum Lichtleiter aufweist. Die erste Oberfläche ist typischerweise diejenige Oberfläche, über welche die Glasscheibe bei der Erzeugung des Lichtleiters mit der Laserstrahlung bestrahlt wird.

Der Abstand zwischen dem Lichtleiter und der ersten Oberfläche der Glasscheibe beträgt in einer vorteilhaften Ausgestaltung von 20 µm bis 1000 µm, bevorzugt von 50 µm bis 500 µm. In dieser geringen Tiefe lassen sich Lichtleiter vorteilhaft erzeugen, weil die Strahlungsintensität der Laserstrahlung nicht zu sehr abgeschwächt wird. Der Abstand wird gemessen zwischen der ersten Oberfläche und dem ihr am nächsten liegenden Teil der Grenzfläche des Lichtleiters - sie beschreibt also die Schichtdicke des Glases zwischen erster Oberfläche und Lichtleiter. Der besagte Abstand lässt sich durch die Fokusebene der Laserstrahlung bei der Laserbearbeitung einstellen. Der Abstand des Lichtleiters zur ersten Oberfläche kann auch veränderlich sein, wenn der Lichtleiter nicht parallel zu den Scheibenoberflächen verläuft. Zumindest ein Teil des Lichtleiters weist aber bevorzugt einen Abstand zur ersten Oberfläche in den vorgenannten Bereichen auf, besonders bevorzugt der ganze Lichtleiter (genauer gesagt: der ganze Bereich des Lichtleiters, der sich in der Scheibenebene erstreckt, unter Vernachlässigung etwaiger Zuleitungsabschnitte, wie vorstehend beschrieben).

In einer bevorzugten Ausgestaltung ist der Lichtleiter linienartig ausgebildet. Ein solche Lichtleiter lässt sich einfach durch Laserbearbeitung erzeugen, indem der Laserfokus entlang der intendierten Ausdehnungsrichtung des Lichtleiters bewegt wird. Die Form der Linie kann dabei den Erfordernissen im konkreten Anwendungsfall entsprechend frei gewählt werden. Dadurch kann eine Vielzahl unterschiedlicher Anwendungen flexibel realisiert werden. Der linenartige Lichtleiter kann beispielsweise einen Querschnitt in Kreisform oder Ellipsenform aufweisen, was durch die Form des Laserfokus beeinflusst werden kann.

Die Linienbreite des linienartigen Lichtleiters beträgt bevorzugt von 1 µm bis 500 µm, besonders bevorzugt von 2 µm bis 50 µm. Unter der Linienbreite wird dabei die Breitenausdehnung verstanden, die der linienartige Lichtleiter bei Betrachtung in Draufsicht auf die erste oder zweite Oberfläche der Glasscheibe einnimmt. Im Falle eines kreisförmigen Querschnitts entspricht die Linienbreite beispielsweise dem Kreisdurchmesser. Die Linienbreite hängt insbesondere von der Fokusgröße der Laserstrahlung ab und kann dadurch beeinflusst werden.

Ein solcher linienartiger Lichtleiter weist mindestens zwei Enden auf. Der Lichtleiter kann auch verästelt sein und mehr als zwei Enden aufweisen. Die Einkoppelstelle (beziehungsweise jede Einkoppelstelle, falls mehrere vorhanden sind) kann an einem Ende des Lichtleiters angeordnet sein, beziehungsweise durch ein Ende des Lichtleiters ausgebildet sein. Unabhängig davon kann auch die Auskoppelstelle (beziehungsweise jede Auskoppelstelle, falls mehrere vorhanden sind) an einem Ende des Lichtleiters angeordnet sein, beziehungswiese durch ein Ende des Lichtleiters ausgebildet sein. Die Einkoppelstelle und/oder die Auskoppelstelle können aber auch in einem mittleren Abschnitt des Lichtleiters angeordnet sein beziehungsweise dadurch ausgebildet sein, welcher von den Enden beabstandet ist. Es sind auch Kombinationen möglich, wobei der Lichtleiter mehrere Einkoppelstellen und/oder mehrere Auskoppelstellen aufweist, von denen mindestens eine an einem Ende und mindestes eine in einem mittleren Abschnitt angeordnet ist.

Die mindestens zwei Enden können auf einer Außenfläche der Glasscheibe angeordnet sein, insbesondere an der Seitenkantenfläche der Glasscheibe, der ersten Oberfläche der Glasscheibe, der zweiten Oberfläche der Glasscheibe oder der Kantenfläche einer Ausnehmung in der Glasscheibe. Alternativ kann mindestens ein Ende des Lichtleiters auf einer Außenfläche der Glasscheibe angeordnet sein und mindestens ein weiteres Ende im Innern der Glasscheibe angeordnet sein, so dass das besagte Ende vollständig von umliegendem Glasmaterial umgeben ist. Es ist insbesondere dann sinnvoll, dass ein Ende auf einer Außenfläche der Glasscheibe angeordnet ist, wenn das besagte Ende eine Ein- oder Auskoppelstelle des Lichtleiters bildet. Alternativ können die mindestens zwei Enden im Innern der Glasscheibe angeordnet sein, so dass sie vollständig von umliegendem Glasmaterial umgeben sind. Der Lichtleiter ist dann vollständig in der Glasscheibe eingelagert ohne Kontakt zur äußeren Umgebung und ist vollständig von Glasmaterial umgeben.

Das Verglasungselement beziehungsweise die Glasscheibe ist bevorzugt mit einer Lichtquelle ausgestattet, welche geeignet ist, Licht in den Lichtleiter einzukoppeln. Das Licht wird an der mindestens einen Einkoppelstelle in den Lichtleiter eingekoppelt und die Lichtquelle ist der Einkoppelstelle zugeordnet. Das Licht wird dabei derart eingekoppelt, dass es sich im Lichtleiter ausbreitet, insbesondere durch Totalreflexion an seiner Grenzfläche zum umliegenden Material der Glasscheibe. Die Lichteinkopplung kann insbesondere über die Seitenkantenfläche der Glasscheibe, über die Kantenfläche einer Ausnehmung der Glasscheibe oder durch mithilfe eines Lichteinkopplungsmittels über die erste oder die zweite Oberfläche der Glasscheibe erfolgen. Das Licht wird in den Lichtleiter eingestrahlt und trifft auf die Grenzfläche des Lichtleiters zum umliegenden Material der Glasscheibe. Da der Lichtleiter einen höheren Brechungsindex aufweist als das umliegende Material, stellt diese Grenzfläche einen Übergang von einem optisch dichteren in ein optisch weniger dichtes Medium das und es kann ein Grenzwinkel $\alpha_\tau$ der Totalreflexion

bestimmt werden als $\alpha_T = \arcsin(\frac{n_2}{n_1})$,

wobei ni der Brechungsindex des Lichtleiters und $n_2$ der Brechungsindex des umliegenden Materials der Glasscheibe ist.

Das Licht wird typischerweise durch die Lichtquelle über einen gewissen Winkelbereich in den Lichtleiter eingestrahlt. Die Lichtstrahlen treffen kann aus dem Innern des Lichtleiters auf seine Grenzfläche. Ein Lichtstrahl trifft mit einem Einfallswinkel auf die besagte Grenzfläche, welcher davon abhängt, mit welchem Winkel der Lichtstrahl eingestrahlt wurde. Es sind dabei zwei Situation zu unterscheiden:

- Ist der Einfallswinkel kleiner als der Grenzwinkel der Totalreflexion, so wird der Lichtstrahl an der Grenzfläche gebrochen und tritt größtenteils in die umliegende Glasscheibe über. Diese Situation tritt insbesondere in der Nähe der Einkoppelstelle auf. Nur ein geringer Teil wird an der Grenzfläche reflektiert mit einem Ausfallswinkel, der dem Einfallswinkel entspricht, und trifft dann gegenüberliegend abermals auf die Grenzfläche, wo erneut ein Großteil der verbleibenden Lichtintensität gebrochen wird und den Lichtleiter verlässt. Dieses Licht wird nicht durch den Lichtleiter geleitet und geht für die bestimmungsgemäße Verwendung verloren. Die unerwünschte Abstrahlung in der Nähe der Einkoppelstelle kann optional durch ein opakes Element verhindert werden, beispielsweise einen Abdeckdruck oder einen Aufkleber.
- Ist der Einfallswinkel größer als der Grenzwinkel der Totalreflexion, so wird der Lichtstrahl an der Grenzfläche totalreflektiert mit einem Ausfallswinkel, der dem Einfallswinkel entspricht. Das Licht tritt nicht in die umliegende Glasscheibe über und breitet sich infolge wiederholter Totalreflexion im Wesentlichen verlustfrei im Lichtleiter aus.

Wie in der Strahlenoptik üblich wird mit Einfallswinkel derjenige Winkel bezeichnet, den der auf die Grenzfläche einfallende Lichtstrahl zur Flächennormalen der Grenzfläche am Ort des Auftreffens aufweist. Der Ausfallswinkel wird analog ebenfalls zur Flächennormalen bestimmt, ebenso wie der Grenzwinkel der Totalreflexion.

Die Lichtquelle sendet im Betrieb sichtbares Licht aus, also elektromagnetische Strahlung, insbesondere im Bereich von 380 nm bis 2000 nm. Im Sinne der Erfindung umfasst "Licht" also nicht nur den sichtbaren Spektralbereich, sondern auch infrarote Strahlung. Bei Anwendungen zur Beleuchtung weist das Licht eine Wellenlänge im sichtbaren Spektralbereich auf, insbesondere im Bereich von 380 nm bis 780 nm. Bei Anwendungen zur photonischen Kommunikation (Datenübertragung) kann sichtbares Licht oder infrarote Strahlung verwendet werden. Die Lichtquelle kann eine oder mehrere Emissionsbanden aufweisen, welche im sichtbaren Spektralbereich angeordnet ist beziehungsweise sind und einen Teil davon abdeckt beziehungsweise abdecken. Die Lichtquelle kann aber auch eine breite Emissionsbande aufweisen, die den gesamten sichtbaren Spektralbereich abdeckt. Die Emissionsbande(n) - und damit die Farbe des abgestrahlten Lichts - kann beziehungsweise können den Anforderungen im konkreten Anwendungsfall entsprechend frei gewählt werden.

Das Verglasungselement kann mit einer einzelnen Lichtquelle versehen sein oder auch mit mehreren Lichtquellen, deren Licht an unterschiedlichen Einkoppelstellen in den Lichtleiter eingekoppelt wird. Das Licht der Lichtquelle kann direkt oder über ein optisches Element, beispielsweise eine Linse, eine optische Faser oder einen optischen Klebstoff, in den Lichtleiter eingekoppelt werden.

Die Lichtquelle ist bevorzugt eine Leuchtdiode (LED, *light-emitting diode)*. Das elektrolumineszente Material der Leuchtdiode kann beispielsweise ein anorganischer Halbleiter oder ein organischer Halbleiter sein. In letztem Fall spricht man auch von einer organischen Leuchtdiode (OLED, *organic light emitting diode)*. Die Lichtquelle ist alternativ bevorzugt das Austrittsende einer Glasfaser, welche ihrerseits als Lichtleiter fungiert und das Licht zum Verglasungselement leitet. In diese Glasfaser kann wiederum beispielsweise die Strahlung einer Leuchtdiode oder eines Diodenlasers eingekoppelt werden.

Die Einkopplung des Lichts in den Lichtleiter kann auf unterschiedliche Art und Weise erfolgen und die mindestens eine Einkoppelstelle dementsprechend unterschiedlich ausgebildet sein.

In einer ersten bevorzugten Ausgestaltung erfolgt die Einkopplung über die Seitenkantenfläche der Glasscheibe. Mindestens ein Ende des Lichtleiters ist auf der Seitenkantenfläche der Glasscheibe angeordnet und bildet eine Einkoppelstelle aus. Die Lichtquelle ist der Seitenkantenfläche der Glasscheibe (genauer gesagt der Einkoppelstelle auf der Seitenkantenfläche) zugeordnet und dazu geeignet, Licht über die Seitenkantenfläche (genauer gesagt die Einkoppelstelle auf der Seitenkantenfläche) in den Lichtleiter einzukoppeln. Das von der Lichtquelle abgestrahlte Licht kann dabei direkt auf die Seitenkantenfläche treffen. Die Lichtquelle kann dazu seitlich der Glasscheibe in der durch die Glasscheibe definierten Ebene angeordnet sein. Dazu kann die Lichtquelle direkt an der Seitenkantenfläche befestigt sein, beispielsweise angeklebt oder angeklemmt sein. Alternativ kann die Lichtquelle auch in einem Gehäuse oder einer Halterung befindlich und dort fixiert sein, wobei das Gehäuse oder die Halterung derart an der Glasscheibe befestigt ist, beispielsweise angeklebt oder angeklemmt, dass die Lichtquelle die Seitenkantenfläche bestrahlt. Es ist aber auch möglich, dass die Lichtquelle die Seitenkantenfläche nicht direkt bestrahlt, sondern die Strahlung dazu zunächst umgelenkt wird. So ist es denkbar, dass sich die Lichtquelle in einem Gehäuse befindet, welches spiegelnde Flächen oder Wellenleiter beinhaltet, durch welche der Strahlengang des Lichts gestaltet wird. Dieses Gehäuse ist derart an der Glasscheibe befestigt, dass der Strahlengang das Licht der Seitenkantenfläche der Glasscheibe zuführt. Die Lichtquelle selbst muss sich dann nicht seitlich der Glasscheibe in der durch die Glasscheibe definierten Ebene befinden, sondern kann beispielsweise in Durchsichtsrichtung vor oder hinter der Glasscheibe angeordnet sein. Das besagte Gehäuse ist bevorzugt an einer exponierten Oberfläche der Glasscheibe befestigt und erstreckt sich von dort aus zur Seitenkantenfläche der Glasscheibe. Wenn der Lichtleiter verästelt ist, können optional mehrere Enden des Lichtleiters auf der Seitenkantenfläche der Glasscheibe angeordnet sein und mehrere Einkoppelstellen ausbilden.

In einer zweiten bevorzugten Ausgestaltung weist die Glasscheibe eine Ausnehmung auf und die Einkopplung erfolgt über die Kantenfläche der Ausnehmung. Mindestens ein Ende des Lichtleiters ist auf der Kantenfläche der Ausnehmung angeordnet und bildet eine Einkoppelstelle aus. Die Lichtquelle ist der Kantenfläche der Ausnehmung (genauer gesagt der Einkoppelstelle auf der Kantenfläche) zugeordnet und dazu geeignet, Licht über die Kantenfläche (genauer gesagt die Einkoppelstelle auf der Kantenfläche) in den Lichtleiter einzukoppeln. Die Ausnehmung ist bevorzugt ein Loch, also eine Durchführung, welche sich zwischen der ersten und der zweiten Oberfläche der Glasscheibe erstreckt. Die Ausnehmung kann aber alternativ auch eine Vertiefung nach Art einer Sackbohrung sein (sackartige Vertiefung), welche sich ausgehend von der ersten Oberfläche oder der zweiten Oberfläche in die Glasscheibe hinein erstreckt, ohne jedoch die gegenüberliegende Hauptfläche zu erreichen, wodurch sich eine Durchführung ergeben würde. Die Sackbohrung erstreckt sich bevorzugt ausgehen von einer Oberfläche in die Glasscheibe hinein, welche eine exponierte Oberfläche des erfindungsgemäßen Glaselements bildet. Die Lichtquelle kann dann nachträglich eingesetzt werden und im Falle eines Defekts einfach ausgetauscht werden. Im Falle einer Verbundscheibe ist diejenige Oberfläche der Glasscheibe die exponierte Oberfläche, die von der Zwischenschicht abgewandt ist. Die Ausnehmung kann beispielsweise durch mechanisches Bohren oder durch Laserbearbeitung in der Glasscheibe erzeugt werden. Die Ausnehmung ist bevorzugt rund ausgebildet, kann aber grundsätzlich jede beliebige Form aufweisen, beispielweise auch eine polygonale Form. Damit ist die Grundfläche der Ausnehmung gemeint in der Ebene der mindestens einen Oberfläche der Glasscheibe, über welche die Ausnehmung in die Glasscheibe eingebracht ist. Die Ausnehmung hat insgesamt die Form eines Zylinders, bevorzugt senkrechten Zylinders. Der Zylinder ist bevorzugt ein Kreiszylinder (kreisrunde Grundfläche), kann aber auch beliebige andere Grundflächen aufweisen, beispielsweise eine elliptische Grundfläche (elliptischer Zylinder) oder eine polygonale Grundfläche (Prisma).

Die Ausnehmung, sei es als Durchführung oder als Vertiefung, wird durch eine umlaufende Kantenfläche begrenzt, welche sich zwischen den Hauptflächen der Glasscheibe erstreckt. Im Falle der Durchführung ist dies die einzige Begrenzungsfläche der Ausnehmung. Im Fall der sackartigen Vertiefung ist eine weitere Begrenzungsfläche vorhanden, welche derjenige Hauptfläche der Glasscheibe zugewandt ist, bis zu der sich die Vertiefung nicht erstreckt, und welche gleichsam den Boden der Sackbohrung bildet. Umfasst das Verglasungselement mehrere Lichtquellen, so ist für jede Lichtquelle bevorzugt eine eigene Ausnehmung vorgesehen.

Die Lichtquelle selbst kann in der Ausnehmung angeordnet sein, so dass sie sich in der durch die Glasscheibe definierten Ebene befindet und das abgestrahlte Licht direkt auf die Kantenfläche trifft. Die Lichtquelle kann dazu beispielsweise in die Ausnehmung geklemmt oder an der Kantenfläche angeklebt sein. Es ist auch denkbar, dass die Lichtquelle in einem Gehäuse oder einer Halterung befindlich und dort fixiert ist, wobei das Gehäuse oder die Halterung in die Ausnehmung eingesetzt werden, bevorzugt passgenau. Es ist aber alternativ auch möglich, dass die Lichtquelle die Kantenfläche nicht direkt bestrahlt, sondern die Strahlung dazu zunächst umgelenkt wird. So ist es denkbar, dass sich die Lichtquelle in einem Gehäuse befindet, wobei ein Teil des Gehäuses in die Ausnehmung eingesetzt ist, während sich ein anderer Teil des Gehäuses außerhalb der Ausnehmung befindet. Die Lichtquelle ist in dem Teil des Gehäuses außerhalb der Ausnehmung positioniert und das Licht wird durch spiegelnde Flächen oder Wellenleiter im Gehäuse derart umgelenkt, dass es die Kantenfläche der Ausnehmung bestrahlt. Das besagte Gehäuse ist bevorzugt an einer exponierten Oberfläche der Glasscheibe befestigt und erstreckt sich von dort aus in die Ausnehmung. Wenn der Lichtleiter verästelt ist, können optional mehrere Enden des Lichtleiters auf der Kantenfläche der gleichen Ausnehmung oder auf der Kantenfläche einer jeweils eigenen Ausnehmung angeordnet sein und mehrere Einkoppelstellen ausbilden.

In einer dritten bevorzugten Ausgestaltung erfolgt die Einkopplung über die erste oder die zweite Oberfläche der Glasscheibe, wobei die Einkoppelstelle des Lichtleiters auf der besagten Oberfläche befindlich ist. Mindestens ein Ende des Lichtleiters ist auf der ersten oder der zweiten Oberfläche der Glasscheibe angeordnet und bildet eine Einkoppelstelle aus. Die besagte Oberfläche ist bevorzugt eine exponierte Oberfläche der Glasscheibe. Die Lichtquelle ist der besagten Oberfläche der Glasscheibe (genauer gesagt der Einkoppelstelle auf der Oberfläche) zugeordnet und dazu geeignet, Licht über die Oberfläche der Glasscheibe (genauer gesagt die Einkoppelstelle auf der Oberfläche) in den Lichtleiter einzukoppeln. Das von der Lichtquelle abgestrahlte Licht trifft dabei bevorzugt direkt auf die Einkoppelstelle auf der Oberfläche der Glasscheibe. Die Lichtquelle kann dazu direkt an der Oberfläche der Glasscheibe befestigt sein, beispielsweise angeklebt oder angeklemmt sein. Alternativ kann die Lichtquelle auch in einem Gehäuse oder einer Halterung befindlich und dort fixiert sein, wobei das Gehäuse oder die Halterung derart an der Oberfläche der Glasscheibe befestigt ist, beispielsweise angeklebt oder angeklemmt, dass die Lichtquelle die Einkoppelstelle bestrahlt. Es ist aber auch möglich, dass die Lichtquelle die Einkoppelstelle nicht direkt bestrahlt, sondern die Strahlung dazu zunächst umgelenkt wird. So ist es denkbar, dass sich die Lichtquelle in einem Gehäuse befindet, welches spiegelnde Flächen oder Wellenleiter beinhaltet, durch welche der Strahlengang des Lichts gestaltet wird. Dieses Gehäuse ist derart an der Glasscheibe befestigt, dass der Strahlengang das Licht der Einkoppelstelle zuführt. Wenn der Lichtleiter verästelt ist, können optional mehrere Enden des Lichtleiters auf der ersten und/oder der zweiten Oberfläche der Glasscheibe angeordnet sein und mehrere Einkoppelstellen ausbilden.

In einer vierten bevorzugten Ausgestaltung erfolgt die Einkopplung ebenfalls über die erste oder die zweite Oberfläche der Glasscheibe, jedoch ohne dass die Einkoppelstelle des Lichtleiters auf der besagten Oberfläche befindlich ist. Die Lichtquelle ist der besagten Oberfläche der Glasscheibe zugeordnet und dazu geeignet, Licht über die Oberfläche in die Glasscheibe einzustrahlen, so dass das Licht auf eine im Innern der Glasscheibe befindliche Einkoppelstelle trifft und über diese in den Lichtleiter eingekoppelt wird. Die Lichtquelle ist der besagten Oberfläche angeordnet und strahlt Licht über diese Oberfläche in die Glasscheibe ein. Das Licht wird durch ein Lichteinkopplungsmittel derart abgelenkt, dass es (zumindest teilweise) mit einem Einfallswinkel, der größer ist als der Grenzwinkel der Totalreflexion, im Innern der Glasscheibe in den Lichtleiter eingestrahlt wird. Die Lichtquelle ist bevorzugt an einer exponierten Oberfläche der Glasscheibe beziehungsweise des Verglasungselements angeordnet, so dass sie nachträglich angebracht und im Falle eines Defekts einfach ausgetauscht werden kann.

Das Lichteinkopplungsmittel kann auf der anderen Oberfläche der Glasscheibe angeordnet sein, der Lichtquelle gegenüberliegend (reflektives Lichteinkopplungsmittel). Das Lichteinkopplungsmittel ist dann geeignet, das durch die Glasscheibe hindurch auf das Lichteinkopplungsmittel treffende Licht über die besagte andere Oberfläche (also die Oberfläche, auf der das Lichteinkopplungsmittel angeordnet ist) in die Glasscheibe zurück zu reflektieren und in den Lichtleiter einzukoppeln. Das Lichteinkopplungsmittel kann beispielsweise als Mikroprismenfilm, als strukturierte Kunststofffolie, als Kunststoffplatte mit einer flächigen Anordnung von Mikroprismen oder als reflektiv-holographisches Element ausgebildet sein. Mikroprismenfilme, strukturierte Kunststofffolien und Kunststoffplatten mit einer flächigen Anordnung von Mikroprismen können beispielsweise mit reflektierenden Beschichtungen versehen sein, um die Reflexion des Lichts zu gewährleisten. Das Lichteinkopplungsmittel reflektiert das Licht zurück in die Glasscheibe, aber mit einem veränderten Winkel, der von 0° zur Flächennormalen abweicht. Das Licht wird an der Oberfläche der Glasscheibe sowie an der Grenzfläche des Lichtleiters gebrochen und zumindest ein Teil des resultierenden Lichts im Lichtleiter trifft mit einem Einfallswinkel gegenüberliegend auf die Grenzfläche, der größer ist als der Grenzwinkel der Totalreflexion.

Das Lichteinkopplungsmittel kann alternativ auf der gleichen Oberfläche angeordnet sein, über welche die Lichtquelle das Licht in die Glasscheibe einstrahlt, zwischen der Lichtquelle und der besagten Oberfläche (transmissives Lichteinkopplungsmittel). Das Licht durchläuft das Lichteinkopplungsmittel, bevor es auf die Glasscheibe trifft, und wird dabei abgelenkt. Das Lichteinkopplungsmittel ist dann geeignet, das durch das Lichteinkopplungsmittel hindurchtretende Licht über die der Lichtquelle zugewandte Oberfläche der Glasscheibe in den Lichtleiter einzukoppeln. Das Lichteinkopplungsmittel kann beispielsweise als Mikroprismenfilm, als strukturierte Kunststofffolie, als Kunststoffplatte mit einer flächigen Anordnung von Mikroprismen oder als transmissiv-holographisches Element ausgebildet sein. Alternativ kann eine lichtablenkende Struktur, beispielsweise eine Anordnung von Mikroprismen, direkt in der Glasoberfläche ausgebildet sein, beispielsweise durch Laserbearbeitung. Das durch das Lichteinkopplungsmittel abgelenkte Licht wird an der Oberfläche der Glasscheibe sowie an der Grenzfläche des Lichtleiters gebrochen und zumindest ein Teil des resultierenden Lichts im Lichtleiter trifft mit einem Einfallswinkel gegenüberliegend auf die Grenzfläche, der größer ist als der Grenzwinkel der Totalreflexion

Es ist auch eine Kombination der vorstehend beschriebenen Ausgestaltungen denkbar, wobei mehrere Lichtquellen vorhanden sind, deren Licht auf unterschiedliche Weise in unterschiedliche Einkopplungsstellen des Lichtleiters eingekoppelt wird.

Auch die Auskopplung des Lichts aus dem Lichtleiter kann auf unterschiedliche Art und Weise erfolgen und die mindestens eine Auskoppelstelle dementsprechend unterschiedlich ausgebildet sein.

In einer ersten bevorzugten Ausgestaltung erfolgt die Auskopplung über die Seitenkantenfläche der Glasscheibe. Mindestens ein Ende des Lichtleiters ist auf der Seitenkantenfläche der Glasscheibe angeordnet und bildet eine Auskoppelstelle aus. Das Licht aus dem Lichtleiter tritt über die Auskoppelstelle auf der Seitenkantenfläche aus dem Lichtleiter aus. Wenn der Lichtleiter verästelt ist, können optional mehrere Enden des Lichtleiters auf der Seitenkantenfläche der Glasscheibe angeordnet sein und mehrere Auskoppelstellen ausbilden.

In einer zweiten bevorzugten Ausgestaltung weist die Glasscheibe eine Ausnehmung auf und die Auskopplung erfolgt über die Kantenfläche der Ausnehmung. Mindestens ein Ende des Lichtleiters ist auf der Kantenfläche der Ausnehmung angeordnet und bildet eine Auskoppelstelle aus. Das Licht aus dem Lichtleiter tritt über die Auskoppelstelle auf der Kantenfläche der Ausnehmung aus dem Lichtleiter aus. Zur Gestaltung der Ausnehmung gilt die vorstehende Beschreibung zur Einkopplung über die Kantenfläche einer Ausnehmung entsprechend. Wenn der Lichtleiter verästelt ist, können optional mehrere Enden des Lichtleiters auf der Kantenfläche der gleichen Ausnehmung oder auf der Kantenfläche einer jeweils eigenen Ausnehmung angeordnet sein und mehrere Auskoppelstellen ausbilden.

In einer dritten bevorzugten Ausgestaltung erfolgt die Auskopplung über die erste oder die zweite Oberfläche der Glasscheibe, wobei die Auskoppelstelle des Lichtleiters auf der besagten Oberfläche befindlich ist. Mindestens ein Ende des Lichtleiters ist auf der ersten oder der zweiten Oberfläche der Glasscheibe angeordnet und bildet eine Auskoppelstelle aus. Die besagte Oberfläche ist bevorzugt eine exponierte Oberfläche der Glasscheibe. Das Licht aus dem Lichtleiter tritt über die Auskoppelstelle auf der ersten oder zweiten Oberfläche aus dem Lichtleiter aus. Wenn der Lichtleiter verästelt ist, können optional mehrere Enden des Lichtleiters auf der ersten und/oder der zweiten Oberfläche der Glasscheibe angeordnet sein und mehrere Auskoppelstellen ausbilden.

In einer vierten bevorzugten Ausgestaltung ist die Glasscheibe mit einer lichtstreuenden Struktur versehen ist, die mit dem Lichtleiter in Kontakt steht und geeignet ist, das Licht wieder aus dem Lichtleiter auszukoppeln. Dabei kann die erste oder die zweite Oberfläche der Glasscheibe in einem Bereich oder in mehreren Bereichen mit der lichtstreuenden Struktur versehen sein, welche sich ausgehend von der besagten Oberfläche bis zum Lichtleiter im Innern der Glasscheibe erstreckt. Die lichtstreuende Struktur kann als Aufrauhung der Oberfläche ausgestaltet sein. Eine solche Aufrauhung kann beispielsweise mittels Laserbearbeitung, mechanisch-abrasiv oder chemisch durch Ätzen erzeugt werden. Die lichtstreuende Struktur, insbesondere Aufrauhung, erstreckt sich bis zur Grenzfläche des Lichtleiters und bildet dort eine Auskoppelstelle aus. An der Auskoppelstelle wird die Totalreflexion durch die lichtstreuende Struktur unterbunden. Die lichtstreuende Struktur stellt gleichsam ein Streuzentrum dar, an dem das Licht gestreut und daher nicht totalreflektiert wird. Wenn das sich im Lichtleiter ausbreitende Licht auf diese Auskoppelstelle trifft, wird es aus dem Glasleiter ausgekoppelt und über die besagte Oberfläche der Glasscheibe (genauer gesagt über die von der lichtstreuenden Struktur belegte Fläche dieser Oberfläche) abgestrahlt. Die Abstrahlung des Lichts erfolgt also wie bei der dritten bevorzugten Ausgestaltung über die erste oder die zweite Oberfläche der Glasscheibe, allerdings ist die die Auskoppelstelle des Lichtleiters im Unterschied dazu nicht auf der besagten Oberfläche befindlich, sondern im Innern der Glasscheibe, definiert durch die (lokal aufgebrachte) lichtstreuende Struktur.

Alternativ kann die lichtstreuende Struktur nur im Innern der Glasscheibe ausgebildet sein und sich weder bis zur ersten noch bis zur zweiten Oberfläche erstrecken. Auch eine solche Materialmodifikation ist durch Laserbearbeitung möglich, wobei im Innern der Scheibe ein Streuzentrum erzeugt wird.

Die von der lichtstreuenden Struktur belegte Fläche der Glasscheibe erscheint dem Betrachter als leuchtende Fläche. Dies kann genutzt werden beispielsweise zur Beleuchtung oder zur Realisierung einer Anzeige zur Darstellung von Informationen. Die leuchtende Struktur kann in einem einzelnen zusammenhängenden Bereich der Glasscheibe vorhanden sein oder auch in mehreren voneinander separierten Bereichen (wodurch dann mehrere Auskoppelstellen ausgebildet werden). Durch die lichtstreuende Struktur sind beliebige Formen oder Muster realisierbar.

Es ist auch eine Kombination der vorstehend beschriebenen Ausgestaltungen denkbar, wobei mehrere Auskoppelstellen vorhanden sind, an denen das Licht auf unterschiedliche Weise ausgekoppelt wird.

Der erfindungsgemäße Lichtleiter kann für unterschiedliche Anwendungen eingesetzt werden, insbesondere zur Datenübertragung ober zur Beleuchtung des Verglasungselement.

In einer ersten bevorzugten Ausgestaltung wird der Lichtleiter zur Datenübertragung eingesetzt ("photonische Kommunikation"). Über die Lichtquelle wird Strahlung in den Lichtleiter eingekoppelt, wobei mit dieser Strahlung Datensignale übertragen werden. Das Verglasungselement beziehungsweise die Glasscheibe ist dabei mit einem Lichtsensor ausgestattet. Der Lichtsensor ist der mindestens einen Auskoppelstelle zugeordnet und geeignet, das aus dem Lichtleiter ausgekoppelte Licht zu detektieren und das Datensignal (typischerweise in Verbindung mit einer an den Lichtsensor angeschlossenen Steuereinheit) auszuwerten beziehungsweise elektronisch weiterzuleiten. Der Lichtleiter ist bevorzugt linienartig ausgebildet ohne Verästelungen mit einer einzelnen Einkoppelstelle und einer einzelnen Auskoppelstelle. Ein solcher Lichtleiter zu Datenübertragung kann beispielsweise im Rahmen eines Li-Fi-Netzwerks (*light fidelity*) eingesetzt werden, um ein lokales drahtloses Datennetz zu realisieren.

Hinsichtlich der Einkopplung in den Lichtleiter sind dabei

- die vorgenannte erste bevorzugte Ausgestaltung (Einkopplung über die Seitenkantenfläche) und
- die vorgenannte zweite bevorzugte Ausgestaltung (Einkopplung über die Kantenfläche einer Ausnehmung)

bevorzugt, insbesondere die erste bevorzugte Ausgestaltung. Dies lässt sich vorteilhaft einfach realisieren, zumal die Datenübertragung in aller Regel nur in der Flächendimension der Glasscheibe erfolgt, insbesondere parallel zu der ersten und der zweiten Oberfläche der Glasscheibe.

Grundsätzlich können aber auch

- die vorgenannte dritte bevorzugte Ausgestaltung (direkte Einkopplung über die erste oder zweite Oberfläche) oder
- die vorgenannte vierte bevorzugte Ausgestaltung (indirekte Einkopplung über die erste oder zweite Oberfläche mittels eines Lichteinkopplungsmittels)

eingesetzt werden.

Hinsichtlich der Auskopplung aus dem Lichtleiter sind dabei aus den gleichen Gründen

- die vorgenannte erste bevorzugte Ausgestaltung (Auskopplung über die Seitenkantenfläche) und
- die vorgenannte zweite bevorzugte Ausgestaltung (Auskopplung über die Kantenfläche einer Ausnehmung)

bevorzugt, insbesondere die erste bevorzugte Ausgestaltung. Bei der ersten bevorzugten Ausgestaltung ist der Lichtsensor bevorzugt an der Seitenkantenfläche der Glasscheibe angebracht, bei der zweiten bevorzugten Ausgestaltung in der Ausnehmung.

Grundsätzlich können aber auch

- die vorgenannte dritte bevorzugte Ausgestaltung (Auskopplung über die erste oder zweite Oberfläche, auf der die Auskoppelstelle angeordnet ist) oder
- die vorgenannte vierte bevorzugte Ausgestaltung (Auskopplung über die erste oder zweite Oberfläche mittels einer lichtstreuenden Struktur)

eingesetzt werden.

In einer zweiten bevorzugten Ausgestaltung wird der Lichtleiter zur Beleuchtung der Glasscheibe beziehungsweise des Verglasungselements eingesetzt. Das Licht kann dabei in den Innenraum, der vom Verglasungselement begrenzt wird, abgestrahlt werden, insbesondere um diesen Innenraum zu beleuchten, um ein ästhetisch ansprechendes Muster darzustellen oder um eine Anzeige darzustellen, beispielsweise als Information in Form eines Symbols oder eines Schriftzugs. Das Licht kann alternativ in die äußere Umgebung abgestrahlt werden, insbesondere um ein ästhetisch ansprechendes Muster darzustellen oder um eine Anzeige darzustellen, beispielsweise als Information in Form eines Symbols oder eines Schriftzugs. Das Licht wird in den Lichtleiter eingekoppelt und an den geeigneten Stellen in der geeigneten Form ausgekoppelt, wobei die Beleuchtung mit dem ausgekoppelten Licht realisiert wird. Der Lichtleiter ist bevorzugt linienartig ausgebildet, wobei er optional verästelt sein kann, beispielsweise um über mehrere Auskoppelstellen eine großflächige Beleuchtung oder die Darstellung eines Musters oder einer Information zu realisieren oder um über mehrere Einkoppelstellen eine größere Menge an Licht einzukoppeln oder verschiedenfarbiges Licht.

Hinsichtlich der Einkopplung in den Lichtleiter können alle vorgenannten bevorzugten Ausgestaltungen gleichermaßen eingesetzt werden, nämlich

- die erste bevorzugte Ausgestaltung (Einkopplung über die Seitenkantenfläche) und
- die zweite bevorzugte Ausgestaltung (Einkopplung über die Kantenfläche einer Ausnehmung),
- die dritte bevorzugte Ausgestaltung (direkte Einkopplung über die erste oder zweite Oberfläche) oder
- die vierte bevorzugte Ausgestaltung (indirekte Einkopplung über die erste oder zweite Oberfläche mittels eines Lichteinkopplungsmittels).

Hinsichtlich der Auskopplung aus dem Lichtleiter sind dabei

- die vorgenannte dritte bevorzugte Ausgestaltung (Auskopplung über die erste oder zweite Oberfläche, auf der die Auskoppelstelle angeordnet ist) oder
- die vorgenannte vierte bevorzugte Ausgestaltung (Auskopplung über die erste oder zweite Oberfläche mittels einer lichtstreuenden Struktur)

bevorzugt, weil durch die Auskopplung über die erste oder die zweite Oberfläche die Beleuchtung direkt realisiert werden kann, ohne das Licht nochmal umlenken zu müssen.

Bevorzugt weist der Lichtleiter in dieser Ausgestaltung eine einzelne Einkoppelstelle und eine großflächige Auskoppelstelle oder mehrere Auskoppelstellen auf.

Die Glasscheibe sind erfindungsgemäß aus Kalk-Natron-Glas gefertigt, was für Fensterscheiben üblich ist. Die Dicke der Glasscheibe kann entsprechend den Anforderungen im konkreten Anwendungsfall breit variieren. Vorzugsweise beträgt die Dicke der Glasscheibe von 0,5 mm bis 10 mm, bevorzugt von 1 mm bis 5 mm. Die Glasscheibe ist bevorzugt klar, damit sich das Licht vorteilhaft im Lichtleiter ausbreiten kann.

Das erfindungsgemäße Verglasungselement ist bevorzugt eine Fenster- oder Türscheibe eines Fahrzeugs, eines Gebäudes, eines elektrischen Geräts oder eines Möbelstücks. Sie ist dafür vorgesehen, eingesetzt in eine Fenster- oder Türöffnung, einen Innenraum von einer äußeren Umgebung abzutrennen. Die erste Oberfläche der Glasscheibe kann dabei grundsätzlich die außenseitige oder die innenraumseitige Oberfläche der Glasscheibe darstellen. Mit außenseitiger Oberfläche wird dabei diejenige Oberfläche der Glasscheibe bezeichnet, welche dafür vorgesehen ist, in Einbaulage der äußeren Umgebung zugewandt zu sein. Mit innenraumseitiger Oberfläche wird diejenige Oberfläche bezeichnet, welche dafür vorgesehen ist, in Einbaulage dem Innenraum zugewandt zu sein. Unter elektrischen Geräten werden dabei insbesondere Haushaltsgeräte verstanden, beispielsweise Kühlschränke oder Backöfen. Der Begriff "Haushaltsgerät" ist dabei nicht derart auszulegen, dass nur Geräte in Privathaushalten gemeint sind. Vielmehr können die Geräte kommerziell eingesetzt werden, beispielsweise als Kühlschrank in Supermärkten mit einer Glastür, welche durch das erfindungsgemäße Verglasungselement gebildet wird oder in die das erfindungsgemäße Verglasungselement eingesetzt ist.

Das Verglasungselement beziehungsweise die Glasscheibe kann plan sein oder in einer oder in mehreren Richtungen des Raumes gebogen. In letzterem Fall ist typischerweise eine der Oberflächen konkav und die andere konvex gebogen. Die Seitenkantenfläche kann plan ausgebildet sein. Es ist jedoch üblich, die Seitenkantenfläche zu schleifen, um das von ihnen ausgehende Verletzungsrisiko zu minimieren. Die Seitenkantenfläche ist dann gekrümmt beziehungsweise abgerundet ausgebildet, insbesondere konvex gekrümmt beziehungsweise abgerundet. Gebogene Verglasungselemente sind insbesondere als Fahrzeugscheiben üblich (bevorzugt für Personenkraftwagen oder Lastkraftwagen). Plane Verglasungselement sind insbesondere als Gebäudeverglasungen üblich, aber auch als Fahrzeugscheiben (bevorzugt für Busse, Züge oder bauliche und landwirtschaftliche Nutzfahrzeuge), und ebenso als Verglasungen von elektrischen Geräten oder Möbelstücken.

Das erfindungsgemäße Verglasungselement kann strukturell nur durch die Glasscheibe mit dem Lichtleiter ausgebildet sein (Einzelglasscheibe, Einzelverglasung, monolithische Verglasung). Ein solches Verglasungselement kann beispielsweise als Verglasung von gebäudeähnlichen Einrichtungen verwendet werden, beispielsweise Gartenlauben, landwirtschaftlichen Einrichtungen wie Scheunen oder jagdlichen Einrichtungen wie Ansitzkanzeln, oder als Fahrzeugscheibe (insbesondere Dachscheibe, Seitenscheibe oder Heckscheibe), bevorzugt thermische vorgespannt als sogenanntes Einscheibensicherheitsglas (ESG), oder als Verglasung von Möbelstücken (beispielsweise Schränken oder Vitrinen.

Das erfindungsgemäße Verglasungselement kann alternativ als Verbundscheibe ausgebildet sein. Dabei ist die erfindungsgemäße Glasscheibe mit dem Lichtleiter über eine thermoplastische Zwischenschicht mit einer weiteren Scheibe verbunden. Die Glasscheibe mit dem Lichtleiter kann die Außenscheibe oder die Innenscheibe der Verbundscheibe sein. Mit Innenscheibe wird dabei die in Einbaulage dem Innenraum zugewandte Scheibe der Verbundscheibe bezeichnet. Mit Außenscheibe wird die der äußeren Umgebung zugewandte Scheibe bezeichnet. Die innenraumseitige Oberfläche der Außenscheibe und die außenseitige Oberfläche der Innenscheibe sind einander und der thermoplastischen Zwischenschicht zugewandt und durch die thermoplastische Zwischenschicht miteinander verbunden. Eine solche Verbundscheibe kann beispielsweise als Verglasung von gebäudeähnlichen Einrichtungen verwendet werden, beispielsweise Gartenlauben, landwirtschaftlichen Einrichtungen wie Scheunen oder jagdlichen Einrichtungen wie Ansitzkanzeln, als Bestandteil einer Gebäudeverglasung (nach Art einer Isolierverglasung, wobei die Verbundscheibe über einen rahmenartigen Abstandshalter mit einer weiteren Scheibe verbunden ist) oder als Fahrzeugscheibe, insbesondere als Dachscheibe, Windschutzscheibe, aber auch als Seitenscheibe oder Heckscheibe, oder als Bestandteil einer Verglasung für ein elektrische Geräte (ebenfalls ach Art einer Isolierverglasung), insbesondere einer Kühlschranktür oder Ofentür.

Die thermoplastische Zwischenschicht umfasst zumindest eine Lage eines thermoplastischen Verbindungsmaterial, welche bevorzugt Ethylenvinylacetat (EVA), Polyvinylbutyral (PVB) oder Polyurethan (PU) oder Gemische oder Copolymere oder Derivate davon enthält, besonders bevorzugt PVB. Die Zwischenschicht ist typischerweise aus zumindest einer thermoplastischen Folie ausgebildet. Die Dicke der Folie beträgt bevorzugt von 0,3 mm bis 2 mm, wobei besonders die Standarddicken von 0,36 mm und 0,76 mm gebräuchlich sind. Die Zwischenschicht kann auch mehrere Lagen thermoplastischen Materials umfassen und beispielsweise aus mehreren flächig übereinander angeordneten Polymerfolien ausgebildet sein.

Die weitere Scheibe ist bevorzugt aus Glas gefertigt, insbesondere aus Kalk-Natron-Glas. Die weitere Scheibe kann aber auch aus anderen Glasarten (beispielsweise Borosilikatglas, Quarzglas, Aluminosilikatglas) oder transparenten Kunststoffen (beispielsweise Polymethylmethacrylat oder Polycarbonat) gefertigt sein. Die Dicke der weiteren Scheibe und der erfindungsgemäßen Glasscheibe beträgt bevorzugt von 1 mm bis 3 mm, bevorzugt von 1,4 mm bis 2,5 mm.

Das erfindungsgemäße Verglasungselement kann alternativ als Isolierverglasung ausgebildet sein. Dabei ist die erfindungsgemäße Glasscheibe mit dem Lichtleiter über einen umlaufenden, rahmenartigen Abstandshalter mit einer weiteren Scheibe verbunden. Zwischen der Glasscheibe, der weiteren Scheibe und dem in ihrem Randbereich angeordneten Abstandshalter wird ein Hohlraum ausgebildet, welcher die Wärmeübertragung vermindert und welcher typischerweise mit einem Inertgas gefüllt ist. Auch hier kann die Glasscheibe mit dem Lichtleiter die Außenscheibe oder die Innenscheibe der Isolierverglasung sein. Eine solche Isolierverglasung kann insbesondere als Gebäudeverglasung verwendet werden oder auch als Verglasung von gebäudeähnlichen Einrichtungen, beispielsweise Gartenlauben, landwirtschaftlichen Einrichtungen wie Scheunen oder jagdlichen Einrichtungen wie Ansitzkanzeln, oder als Verglasung von elektrischen Geräten, insbesondere als Kühlschranktür oder Ofentür.

Die weitere Scheibe ist bevorzugt aus Glas gefertigt, insbesondere aus Kalk-Natron-Glas. Die weitere Scheibe kann aber auch aus anderen Glasarten (beispielsweise Borosilikatglas, Quarzglas, Aluminosilikatglas) oder transparenten Kunststoffen (beispielsweise Polymethylmethacrylat oder Polycarbonat) gefertigt sein. Die Dicke der weiteren Scheibe und der erfindungsgemäßen Glasscheibe beträgt bevorzugt von 2 mm bis 10 mm, bevorzugt von 3 mm bis 8 mm.

Das erfindungsgemäße Verglasungselement ist in einer bevorzugten Ausgestaltung eine Fahrzeugscheibe, beispielsweise eine Dachscheibe, Windschutzscheibe, Seitenscheibe oder Heckscheibe. Das Verglasungselement kann dabei als Einzelglasscheibe ausgebildet sein, bevorzugt thermisch vorgespannt, insbesondere im Falle einer Seitenscheibe oder Heckscheibe, oder als Verbundscheibe, insbesondere im Falle einer Windschutzscheibe oder Dachscheibe.

Das Verglasungselement wird dabei bevorzugt zur Beleuchtung eingesetzt, wobei das ausgekoppelte Licht in Richtung des Fahrzeug-Innenraums abgestrahlt wird, um den Fahrzeug-Innenraum zu erhellen, um ein ästhetisches Muster darzustellen oder um eine Anzeige darzustellen.

Die Fahrzeugscheibe ist besonders bevorzugt eine Fahrzeug-Dachscheibe, die als Verbundscheibe ausgebildet ist. Die erfindungsgemäße Glasscheibe bildet dabei die Innenscheibe der Verbundscheibe.

Das erfindungsgemäße Verglasungselement ist in einer weiteren bevorzugten Ausgestaltung eine Gebäudeverglasung, also eine Fensterscheibe, Türscheibe oder Fassadenverglasung eines Gebäudes. Das Verglasungselement ist dabei bevorzugt als Isolierverglasung ausgebildet, wobei die Glasscheibe über einen Abstandshalter mit einer weiteren Scheibe verbunden ist. Die Glasscheibe und/oder die weitere Scheibe können dabei auch Bestandteil einer Verbundscheibe sein.

Das Verglasungselement als Gebäudeverglasung wird bevorzugt zur Beleuchtung eingesetzt, wobei das ausgekoppelte Licht in Richtung der äußeren Umgebung ("nach außen") oder des Gebäude-Innenraums ("nach innen"), insbesondere der äußeren Umgebung abgestrahlt wird, um ein ästhetisches Muster darzustellen oder um eine Anzeige darzustellen. Das ausgekoppelte Licht wird bevorzugt nach außen abgestrahlt. So kann beispielsweise Werbung über die Gebäudeverglasung angezeigt werden oder Geschäftsinhaber können auf ästhetisch ansprechende Weise darüber informieren, ob das Geschäft geöffnet oder geschlossen ist.

Die erfindungsgemäße Glasscheibe mit dem Lichtleiter ist bevorzugt die Außenscheibe der Isolierverglasung, wenn die Lichtabstrahlung nach außen erfolgt, und die Innenscheibe, wenn die Lichtabstrahlung nach innen erfolgt.

Das Verglasungselement als Gebäudeverglasung wird alternativ bevorzugt zur Datenübertragung eingesetzt, welche über den Lichtleiter stattfindet, beispielsweise im Rahmen eines Li-Fi-Netzwerk. Die erfindungsgemäße Glasscheibe mit dem Lichtleiter ist dabei bevorzugt die Innenscheibe der Isolierverglasung, kann grundsätzlich aber auch die Außenscheibe sein.

Das erfindungsgemäße Verglasungselement ist in einer weiteren bevorzugten Ausgestaltung eine Verglasung eines elektrischen Geräts, insbesondere eines Kühlschranks oder eines Backofens oder Mikrowellenofens. Die Verglasung kann insbesondere als Glastür oder Bestandteil davon eingesetzt werden. Das Verglasungselement ist dabei bevorzugt als Isolierverglasung ausgebildet, wobei die Glasscheibe über einen Abstandshalter mit einer weiteren Scheibe verbunden ist. Die Glasscheibe und/oder die weitere Scheibe können dabei auch Bestandteil einer Verbundscheibe sein.

Das Verglasungselement als Verglasung eines elektrischen Geräts wird bevorzugt zur Beleuchtung eingesetzt, wobei das ausgekoppelte Licht in Richtung der äußeren Umgebung ("nach außen") abgestrahlt wird, um eine Anzeige darzustellen. So können beispielsweise bei Kühlschränken in Supermärkten Produkt- und Preisinformationen oder Statusanzeigen wie Uhrzeit, Temperatur oder Ablaufdatum direkt auf der Kühlschranktür angezeigt werden. Alternativ kann die Lichtabstrahlung auch "nach innen" erfolgen, um das elektrische Gerät zu beleuchten. Die erfindungsgemäße Glasscheibe mit dem Lichtleiter ist bevorzugt die Außenscheibe der Isolierverglasung, wenn die Lichtabstrahlung nach außen erfolgt, und die Innenscheibe, wenn die Lichtabstrahlung nach innen erfolgt.

Das erfindungsgemäße Verglasungselement ist in einer weiteren bevorzugten Ausgestaltung eine Verglasung eines Möbelstücks, beispielsweise eines Schranks oder einer Vitrine. Die Verglasung kann insbesondere als Glastür oder Bestandteil davon eingesetzt werden oder als feststehende Durchsichtsverglasung. Das Verglasungselement ist dabei bevorzugt als Einzelglasscheibe ausgebildet.

Das Verglasungselement als Verglasung eines Möbelstücks wird bevorzugt zur Beleuchtung eingesetzt, wobei das ausgekoppelte Licht in Richtung des Innenraums des Möbelstücks ("nach innen") abgestrahlt wird, um den Innenraum zu beleuchten. Alternativ kann die Lichtabstrahlung auch "nach außen" erfolgen, um eine Anzeige darzustellen.

Die Erfindung umfasst außerdem ein Verfahren zur Herstellung eines erfindungsgemäßen Verglasungselement für ein Fahrzeug oder ein Gebäude. Dabei wird die Glasscheibe aus Kalk-Natron-Glas bereitgestellt und der erfindungsgemäße Lichtleiter in der Glasscheibe erzeugt, bevorzugt mittels Laserbearbeitung.

Ist das Verglasungselement eine Verbundscheibe, so wird die Glasscheibe mit einer weiteren Scheibe über eine thermoplastische Zwischenschicht verbunden. Es können an sich bekannte Verfahren zur Lamination zum Einsatz kommen, beispielsweise Autoklavverfahren, Vakuumsackverfahren, Vakuumringverfahren, Kalanderverfahren, Vakuumlaminatoren oder Kombinationen davon. Die Verbindung von Außenscheibe und Innenscheibe erfolgt dabei üblicherweise unter Einwirkung von Hitze, Vakuum und/oder Druck.

Ist das Verglasungselement eine Isolierverglasung, so wird die Glasscheibe mit einer weiteren Scheibe über einen rahmenartigen Abstandshalter verbunden, bevorzugt über einen adhäsive Dichtmasse. Der Scheibenzwischenraum wird bevorzugt mit Inertgas gefüllt.

Ist das Verglasungselement eine Einzelglasscheibe, so wird die Glasscheibe bevorzugt thermisch vorgespannt.

Das Verglasungselement wird optional (und bevorzugt nach einem etwaigen thermischen Vorspannen, Laminieren zu einer Verbundscheibe oder Ausbilden einer Isolierverglasung) mit einer Lichtquelle derart versehen, dass das Licht der Lichtquelle über die Einkoppelstelle in den Lichtleiter eingekoppelt wird. Das Verglasungselement wird ebenfalls optional (und bevorzugt nach einem etwaigen thermischen Vorspannen, Laminieren zu einer Verbundscheibe oder Ausbilden einer Isolierverglasung) mit einem Lichtsensor derart versehen, dass das über die Auskoppelstelle des Lichtleiters ausgekoppelte Licht auf den Lichtsensor trifft.

Die Erfindung umfasst außerdem die Verwendung eines erfindungsgemäßen Verglasungselements als Fahrzeugverglasung (Fahrzeugscheibe), Gebäudeverglasung, Verglasung eines elektrischen Geräts oder Verglasung eines Möbelstücks. Was die Fahrzeugscheibe betrifft, so ist die Verwendung als Fahrzeug-Dachscheibe besonders bevorzugt, alternativ kann das Verglasungselement auch als Windschutzscheibe, Seitenscheibe oder Heckscheibe verwendet werden. Das Fahrzeug kann grundsätzlich ein beliebiges Landfahrzeug, Wasserfahrzeug oder Luftfahrzeug sein, ist bevorzugt ein Personenkraftwagen, Lastkraftwagen oder Schienenfahrzeug. Was die Gebäudeverglasung betrifft, so kann das Verglasungselement beispielsweise als Fensterscheibe, Glasfassade oder Glastür im Außen- oder Innenbereich verwendet werden. Was die Verglasung von elektrischen Geräten betrifft, so kann das Verglasungselement insbesondere als Kühlschranktür, Ofentür oder Bestandteil davon verwendet werden.

In einer ersten bevorzugten Ausführung wird das Verglasungselement insbesondere als Fahrzeugverglasung verwendet, wobei aus dem Lichtleiter Licht ausgekoppelt wird, welches zur Beleuchtung eines Fahrzeug-Innenraums eingesetzt wird.

In einer zweiten bevorzugten Ausführung wird das Verglasungselement insbesondere als Gebäudeverglasung oder als Verglasung eines elektrischen Geräts verwendet, wobei aus dem Lichtleiter Licht ausgekoppelt wird, welches zur Darstellung einer Anzeige eingesetzt wird.

In einer dritten bevorzugten Ausführung wird das Verglasungselement insbesondere als Gebäudeverglasung verwendet, wobei der Lichtleiter zur Datenübertragung eingesetzt wird, wobei Daten von einer Lichtquelle über den Lichtleiter zu einem Lichtsensor geleitet werden.

In einer weiteren bevorzugten Ausführung wird das Verglasungselement insbesondere als Verglasung eines Möbelstücks verwendet, wobei aus dem Lichtleiter Licht ausgekoppelt wird, welches zur Beleuchtung eines Innenraums des Möbelstücks eingesetzt wird.

Die vorstehenden Ausführungen gelten für die Verwendung entsprechen.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:

Fig. 1    eine Draufsicht auf eine erste Ausgestaltung des erfindungsgemäßen Verglasungselements,

Fig. 2    einen Querschnitt entlang X-X' durch das Verglasungselements aus Figur 1,

Fig. 3    einen ersten Querschnitt durch eine zweite Ausgestaltung des erfindungsgemäßen Verglasungselements,

Fig. 4    einen zweiten Querschnitt durch das Verglasungselements aus Figur 3,

Fig. 5    einen Querschnitt durch eine dritte Ausgestaltung des erfindungsgemäßen Verglasungselements,

Fig. 6    einen Querschnitt durch eine vierte Ausgestaltung des erfindungsgemäßen Verglasungselements,

Fig. 7    einen ersten Querschnitt durch eine fünfte Ausgestaltung des erfindungsgemäßen Verglasungselements,

Fig. 8    einen zweiten Querschnitt durch das Verglasungselements aus Figur 7,

Fig. 9    einen Querschnitt durch eine sechste Ausgestaltung des erfindungsgemäßen Verglasungselements,

Fig. 10    einen Querschnitt durch eine siebte Ausgestaltung des erfindungsgemäßen Verglasungselements.

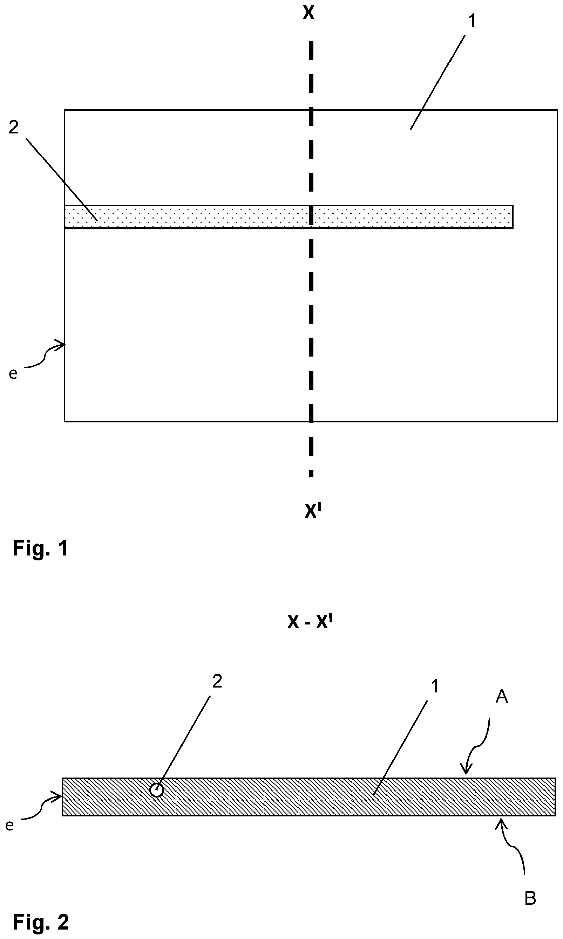

Figur 1 und Figur 2 zeigen je ein Detail einer ersten Ausgestaltung des erfindungsgemäßen Verglasungselements. Das Verglasungselement ist gebildet aus einer einzelnen Glasscheibe 1 aus Kalk-Natron-Glas mit einer ersten Oberfläche A, einer zweiten Oberfläche B und einer dazwischen verlaufenden Seitenkantenfläche e. Die Seitenkantenfläche e ist der Einfachheit halber plan dargestellt, ist in der Realität aber häufig infolge eines Kantenschliffs konvex abgerundet. Im Innern der Glasscheibe 1 ist ein Lichtleiter 2 integriert. Der Lichtleiter 2 ist linienartig ausgebildet mit einer Linienbreite von beispielsweise 5 μm und einem im Wesentlichen kreisförmigen Querschnitt. Er weist zwei Enden auf, wobei ein Ende auf der Seitenkantenfläche e der Glasscheibe 1 liegt und das zweite Ende im Innern der Glasscheibe 1 befindlich ist.

Der Lichtleiter 2 ist durch Laserbearbeitung in der Glasscheibe 1 ausgebildet, wobei gepulste Laserstrahlung mit Pulslängen im Femtosekundenbereich ins Innere der Glasscheibe 1 fokussiert wurde und dann über die Glasscheibe 1 bewegt wurde. Dadurch wird eine Erhöhung des Brechungsindex des mit der Laserstrahlung beaufschlagten Glasmaterials erreicht. Die Grenzfläche des Lichtleiters 2 findet also ein Übergang von einem optisch dichteren Medium (Lichtleiter 2) in ein optisch weniger dichtes Medium (umliegendes Glasmaterial) statt, so dass innerhalb des Lichtleiters Totalreflexion auftreten kann.

Ein solcher Lichtleiter 2 kann beispielsweise zur Beleuchtung des Verglasungselements verwendet werden, indem Licht über das Ende auf der Seitenkantenfläche e des Lichtleiters 2 in diesen eingekoppelt wird. Das Licht breitet sich dann infolge von Totalreflexion an der Grenzfläche des Lichtleiters 2 zum umliegenden Glasmaterial im Lichtleiter 2 aus und kann andernorts wieder ausgekoppelt werden, um die Beleuchtung zu realisieren.

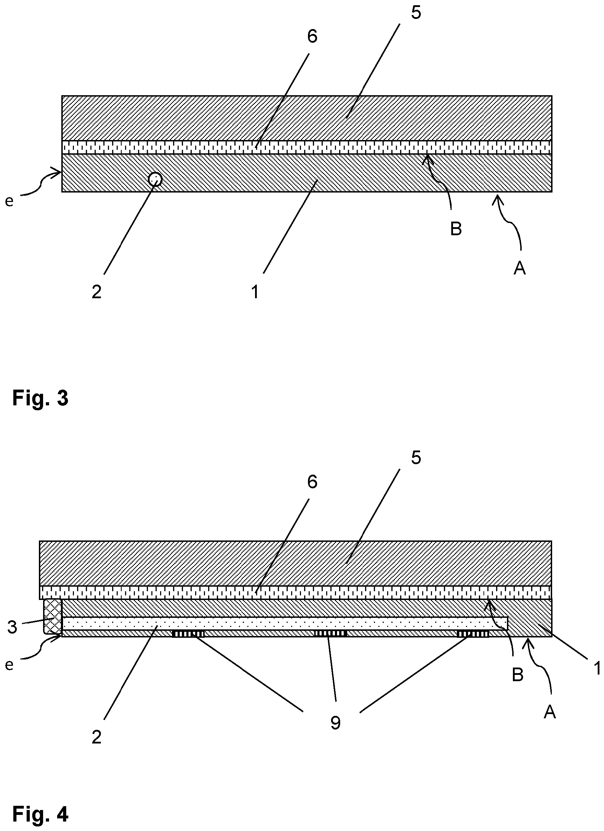

Figur 3 und Figur 4 zeigen zwei zueinander orthogonale Querschnitte durch eine weitere Ausgestaltung des erfindungsgemäßen Verglasungselements. Das Verglasungselement ist als Verbundscheibe ausgebildet. Es umfasst die Glasscheibe 1 aus den Figuren 1 und 2 als Innenscheibe, welche über eine thermoplastische Zwischenschicht 6 mit einer weiteren Scheibe 5 (Außenscheibe) verbunden ist. Die Glasscheibe 1 weist beispielsweise eine Dicke von 1,6 mm auf. Die weitere Scheibe 5 ist ebenfalls aus Kalk-Natron-Glas gebildet und weist eine Dicke von 2,1 mm auf. Die thermoplastische Zwischenschicht 6 ist auf Basis von PVB ausgebildet und weist eine Dicke von 0,76 mm auf. Der Querschnitt aus Figur 3 schneidet den Lichtleiter 2, während im Querschnitt aus Figur 4 der Lichtleiter 2 entlang seiner Längenausdehnung zu erkennen ist.

Das Verglasungselement ist als Dachscheibe eines Fahrzeugs, insbesondere eines Personenkraftwagens vorgesehen. Es ist der Einfachheit halber plan dargestellt, obwohl solche Fahrzeugscheiben typischerweise sphärisch gebogen sind.

Mittels des Lichtleiters 2 kann eine Beleuchtung des Fahrzeug-Innenraums erreicht werden. Das Verglasungselement ist mit einer Lichtquelle 3 ausgestattet, welche an der Seitenkantenfläche e der Glasscheibe befestigt ist, an der Stelle, auf der das Ende des Lichtleiters 2 liegt. Dieses Ende fungiert als Einkoppelstelle des Lichtleiters 2. Das Licht der Lichtquelle 3 wird in den Lichtleiter 2 eingekoppelt und breitet sich im Lichtleiter 2 aus. Die von der Zwischenschicht 6 und der weiteren Scheibe 5 abgewandte, erste Oberfläche A der Glasscheibe 1 ist in Bereichen mit einer lichtstreuenden Struktur 9 versehen. Die lichtstreuende Struktur 9 ist eine Art Aufrauhung, welche mittels Laserstrahlung erzeugt ist und sich ausgehend von der ersten Oberfläche A bis zum Lichtleiter 2 erstreckt. Durch die lichtstreuende Struktur 9 wird die Totalreflexion im Lichtleiter 2 unterbrochen und das Licht wird über die Stellen (Auskoppelstellen), die mit der lichtstreuenden Struktur 9 versehen sind, aus dem Lichtleiter 2 ausgekoppelt und über die erste Oberfläche A der Glasscheibe 1 abgestrahlt. So lässt sich die Beleuchtung des Innenraums beispielsweise in Form eines ästhetisch ansprechenden Musters, welches durch die lichtstreuende Struktur 9 festgelegt wird, realisieren.

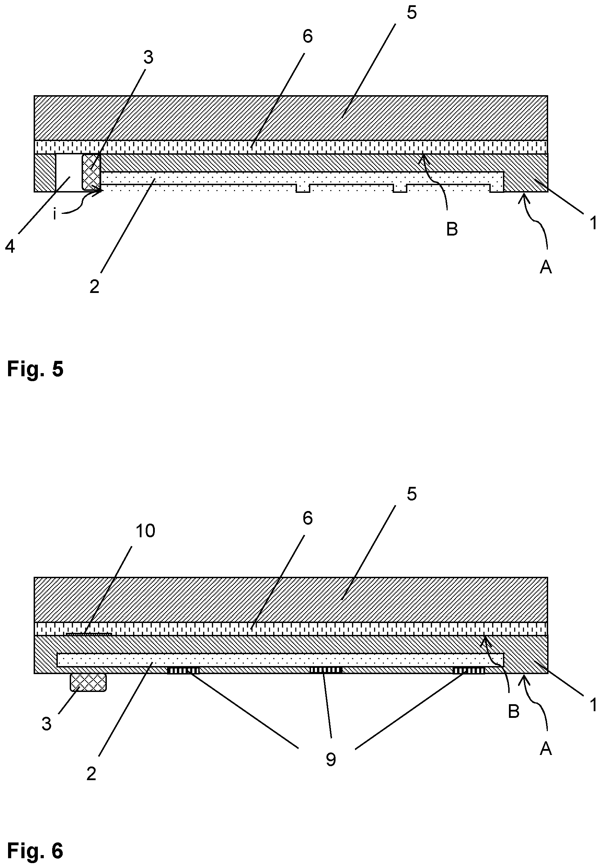

Figur 5 zeigt einen Querschnitt durch eine weitere Ausgestaltung des erfindungsgemäßen Verglasungselements, wobei der Lichtleiter 2 entlang seiner Längenausdehnung zu erkennen ist. Das Verglasungselement ist wieder als Verbundscheibe ausgebildet und unterscheidet sich von der Ausgestaltung aus den Figuren 3 und 4 durch die Gestaltung des Lichtleiters 2, insbesondere was die Ein- und die Auskopplung des Lichts betrifft.

Das Licht wird nicht über die Seitenkantenfläche e der Glasscheibe 1 in den Lichtleiter 2 eingekoppelt. Die Glasscheibe 1 weist eine Ausnehmung 4 in Form einer Durchführung auf, welche von einer umlaufenden Kantenfläche i begrenzt wird. Ein Ende des Lichtleiters 2, welches als Einkoppelstelle fungiert, ist auf dieser Kantenfläche i angeordnet. Die Lichtquelle 3 ist in die Ausnehmung 4 eingesetzt und an der Kantenfläche i befestigt, so dass Licht in den Lichtleiter 2 eingekoppelt wird und sich im Lichtleiter 2 ausbreitet. Der Lichtleiter 2 ist verästelt und weist mehrere Enden auf, die als Auskoppelstellen fungieren und auf der ersten Oberfläche A der Glasscheibe 1 angeordnet sind. Das Licht wird diesen Auskoppelstellen zugeführt und über die erste Oberfläche A aus der Glasscheibe 1 abgestrahlt. Auch auf diese Art lässt sich eine Beleuchtung des Innenraums beispielsweise in Form eines ästhetisch ansprechenden Musters, welches durch die Form und Verteilung der Auskoppelstellen festgelegt wird, realisieren.

Figur 6 zeigt einen Querschnitt durch eine weitere Ausgestaltung des erfindungsgemäßen Verglasungselements, wobei der Lichtleiter 2 entlang seiner Längenausdehnung zu erkennen ist. Das Verglasungselement ist wieder als Verbundscheibe ausgebildet und unterscheidet sich von der Ausgestaltung aus den Figuren 3 und 4 durch die Gestaltung des Lichtleiters 2, was die Einkopplung des Lichts betrifft.

Der Lichtleiter 2 ist vollständig in die Glasscheibe 1 eingelagert und erstreckt sich an keiner Stelle bis zur Seitenkantenfläche e. In der Nähe eines Endes des Lichtleiters 2 ist eine Lichtquelle 3 an der ersten Oberfläche A der Glasscheibe 1 befestigt. Der Lichtquelle 3 gegenüberliegend ist ein Lichteinkopplungsmittel 10 an der zweiten Oberfläche B der Glasscheibe 1 befestigt. Die Lichtquelle 3 bestrahlt das Lichteinkopplungsmittel 10 durch die Glasscheibe 1 hindurch. Das Lichteinkopplungsmittel 10 ist beispielsweise als Mikroprismenfilm ausgebildet, welcher mit einer reflektierenden Beschichtung versehen ist. Das Lichteinkopplungsmittel reflektiert das Licht und lenkt es dabei ab, so dass zumindest ein Teil des Lichts unter einem derartigen Winkel in den Lichtleiter 2 eintritt, dass es sich infolge von Totalreflexion im Lichtleiter 2 ausbreitet.

Die Auskopplung des Lichts aus dem Lichtleiter 2 erfolgt genau wie in der Ausgestaltung aus den Figuren 3 und 4 durch lichtstreuende Strukturen 9 zwischen der ersten Oberfläche 9 und dem Lichtleiter 2.

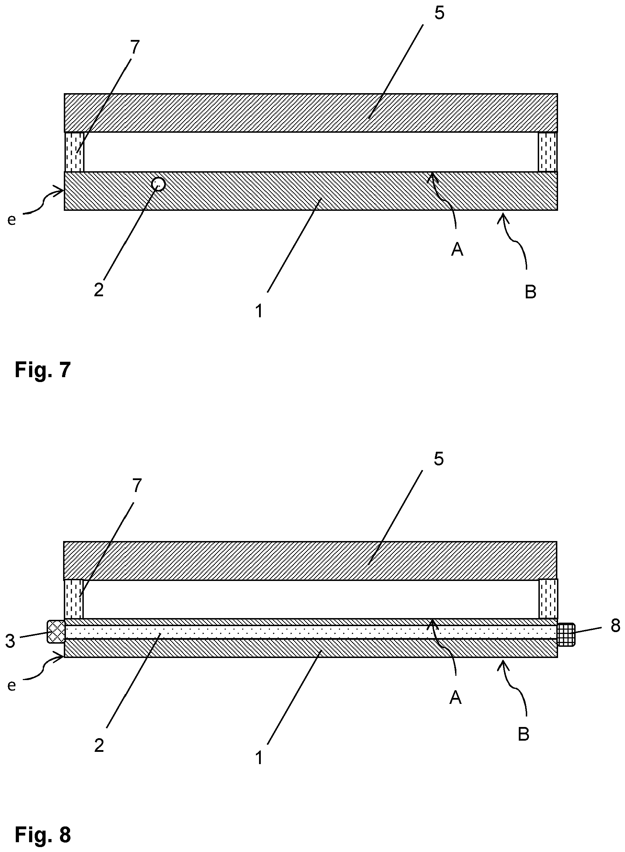

Figur 7 und Figur 8 zeigen zwei zueinander orthogonale Querschnitte durch eine weitere Ausgestaltung des erfindungsgemäßen Verglasungselements. Das Verglasungselement ist als Isolierverglasung ausgebildet. Es umfasst eine Glasscheibe 1 mit einem integrierten Lichtleiter 2 als Innenscheibe, welche über einen rahmenartigen, umlaufenden Abstandshalter 7 mit einer weiteren Scheibe 5 (Außenscheibe) verbunden ist.

Das Verglasungselement ist beispielsweise als Fensterscheibe eines Gebäudes vorgesehen. Die Glasscheibe 1 und die weitere Scheibe 5 sind jeweils aus Kalk-Natron-Glas gefertigt und weisen eine Dicke von beispielsweise 5, mm auf. Der Querschnitt aus Figur 7 schneidet den Lichtleiter 2, während im Querschnitt aus Figur 8 der Lichtleiter 2 entlang seiner Längenausdehnung zu erkennen ist.

Der Lichtleiter 2 ist linienartig ausgebildet und erstreckt sich von einer Seite der Glasscheibe 1 zur gegenüberliegenden Seite, wobei beide Enden des Lichtleiters 2 auf der Seitenkantenfläche e der Glasscheibe angeordnet sind. Ein solcher Lichtleiter 2 kann beispielsweise zur Datenübertragung verwendet werden ("photonische Kommunikation"), beispielsweise im Rahmen eines Li-Fi-Netzwerks innerhalb des Gebäudes. Ein Ende des Lichtleiters 2 fungiert als Einkoppelstelle. Dort ist eine Lichtquelle 3 an der Seitenkantenfläche e angebracht, welche Licht in den Lichtleiter 2 einkoppelt. Das Licht trägt eine Dateninformation, beispielsweise in Form von Impulsen oder einer Frequenzmodulation, welche über den Lichtleiter 2 zum anderen Ende übertragen wird, welches als Auskoppelstelle fungiert. Dort ist ein Lichtsensor 8 an der Seitenkantenfläche e angebracht, welcher das übertragene Licht detektiert und mit einer Steuereinheit verbunden ist, die geeignet ist, die Dateninformation auszuwerten und weiterzuleiten oder andersartig zu verarbeiten.

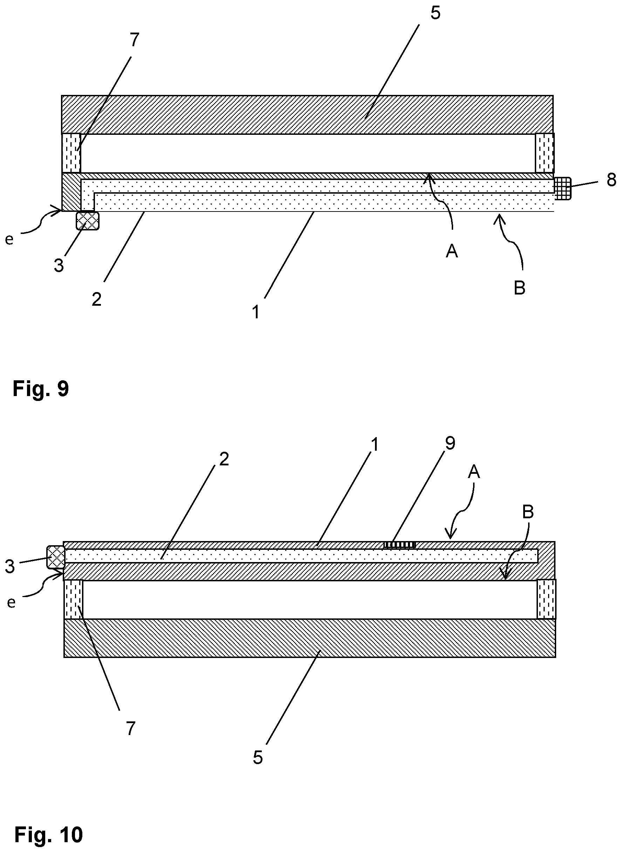

Figur 9 zeigt einen Querschnitt durch eine weitere Ausgestaltung des erfindungsgemäßen Verglasungselements, wobei der Lichtleiter 2 entlang seiner Längenausdehnung zu erkennen ist. Das Verglasungselement ist wieder als Isolierverglasung ausgebildet und unterscheidet sich von der Ausgestaltung aus den Figuren 7 und 8 durch die Gestaltung des Lichtleiters 2, was die Einkopplung des Lichts betrifft. Der Lichtleiter 2 wird auch hier zur Datenübertragung eingesetzt.

Das Ende des Lichtleiters 2, welches als Einkoppelstelle fungiert, ist nicht auf der Seitenkantenfläche e der Glasscheibe 1 angeordnet, sondern auf der von der weiteren Scheibe 5 abgewandten zweiten Oberfläche B der Glasscheibe 1. Entsprechend ist die Lichtquelle 3 dort an der zweiten Oberfläche B angebracht, um das Licht in den Lichtleiter einzuspeisen. Die Auskopplung des Lichts aus dem Lichtleiter 2 erfolgt genau wie in der Ausgestaltung aus den Figuren 7 und 8 über die Seitenkantenfläche e, wo ein Lichtsensor 8 angeordnet ist, um das Datensignal auszuwerten.

Figur 10 zeigt einen Querschnitt durch eine weitere Ausgestaltung des erfindungsgemäßen Verglasungselements, wobei der Lichtleiter 2 entlang seiner Längenausdehnung zu erkennen ist. Das Verglasungselement ist wieder als Isolierverglasung ausgebildet, wobei in diesem Fall die Glasscheibe 1 mit dem Lichtleiter 2 die Außenscheibe bildet und die weitere Scheibe die Innenscheibe. Die Isolierverglasung ist als Fensterscheibe eines Gebäudes vorgesehen und der Lichtleiter 2 wird zur Beleuchtung eingesetzt. So können beispielsweise Informationen in Form von Symbolen oder Schriftzügen nach außen dargestellt werden.

Ein Ende des Lichtleiter 2 ist auf der Seitenkantenfläche e der Glasscheibe 1 angeordnet und fungiert als Einkoppelstelle. Das Licht einer Lichtquelle 3 wird dort in den Lichtleiter 2 eingespeist und breitet sich darin aus. Das Licht wird durch eine lichtstreuende Struktur 9 aus dem Lichtleiter 2 ausgekoppelt und über die erste Oberfläche A, welche die außenseitige Oberfläche der Glasscheibe 1 bildet, abgestrahlt, um die Beleuchtung zu realisieren.

Die hier gezeigten Merkmalskombinationen sind lediglich beispielhaft zu verstehen und sollen die Erfindung nicht einschränken. So ist grundsätzlich jede Art der Lichteinkopplung mit jeder Art der Lichtauskopplung kombinierbar und das Verglasungselement kann Einzelglasscheibe, als Verbundglas, als Isolierverglasung oder als beliebige andere Art von Verglasungselement ausgebildet sein, solange es die erfindungsgemäße Glasscheibe 1 mit dem Lichtleiter 2 als Bestandteil enthält.

Bezugszeichenliste:

(1)      Glasscheibe

(2)      Lichtleiter

(3)      Lichtquelle

(4)      Ausnehmung der Glasscheibe 2

(5)      weitere Scheibe

(6)      thermoplastische Zwischenschicht

(7)      Abstandshalter

(8)      Lichtsensor

(9)      lichtstreuende Struktur

(10)      Lichteinkopplungsmittel

(e)      Seitenkantenfläche der Glasscheibe 1

(i)      Kantenfläche der Ausnehmung 4

(A)      erste Oberfläche der Glasscheibe 1

(B)      zweite Oberfläche der Glasscheibe 1

X - X'      Schnittlinie

**Patentansprüche**

1. Verglasungselement, umfassend eine Glasscheibe (1) aus Kalk-Natron-Glas mit einer ersten Oberfläche (A), einer zweiten Oberfläche (B) und einer dazwischen verlaufenden Seitenkantenfläche (e), wobei in der Glasscheibe (1) ein Lichtleiter (2) ausgebildet ist, der zumindest in einem Abschnitt in der Ebene der Glasscheibe (1) verläuft und dabei von der ersten Oberfläche (A) und der zweiten Oberfläche (B) beabstandet ist und dessen Brechungsindex höher ist als der Brechungsindex des umliegenden Materials der Glasscheibe (1).

2. Verglasungselement nach Anspruch 1, wobei der Lichtleiter (2) linienartig ausgebildet ist, bevorzugt mit einer Linienbreite von 1 μm bis 500 μm, besonders bevorzugt von 2 μm bis 50 μm.

3. Verglasungselement nach Anspruch 1 oder 2, wobei der Abstand zwischen dem Lichtleiter (2) und der ersten Oberfläche (A) der Glasscheibe (1) von 20 μm bis 1000 μm beträgt, bevorzugt von 50 μm bis 500 μm.

4. Verglasungselement nach einem der Ansprüche 1 bis 3, wobei der Lichtleiter (2) durch Laserbearbeitung in der Glasscheibe (2) ausgebildet ist, bevorzugt mit Laserpulsen mit Pulslängen im Femtosekundenbereich und einer Wellenlänge von 400 nm bis 2000 nm.

5. Verglasungselement nach einem der Ansprüche 1 bis 4, welches mit einer Lichtquelle (3) ausgestattet ist, die geeignet ist, Licht derart in den Lichtleiter (2) einzukoppeln, dass sich das Licht im Lichtleiter (2) ausbreitet, insbesondere durch Totalreflexion an seiner Grenzfläche zum umliegenden Material der Glasscheibe (1).

6. Verglasungselement nach Anspruch 5, wobei die Lichtquelle (3) derart am Verglasungselement angebracht ist, dass sie geeignet ist, Licht über eine Einkoppelstelle in den Lichtleiter (2) einzukoppeln, und wobei die Einkoppelstelle des Lichtleiters (2)

   - auf der Seitenkantenfläche (2) der Glasscheibe (1) angeordnet ist oder
   - auf einer Kantenfläche (i) einer Ausnehmung (4) in der Glasscheibe (1) angeordnet ist oder
   - auf der ersten Oberfläche (A) oder der zweiten Oberfläche (B) angeordnet ist.

7. Verglasungselement nach Anspruch 5, wobei die Lichtquelle (3) derart am Verglasungselement angebracht ist, dass sie geeignet ist, Licht über die erste Oberfläche (A) oder die zweite Oberfläche (B) in die Glasscheibe (1) einzustrahlen, wobei das Licht durch ein Lichteinkopplungsmittel (10) derart abgelenkt wird, dass es im Innern der Glasscheibe (1) in den Lichtleiter (2) eingekoppelt wird.

8. Verglasungselement nach einem der Ansprüche 5 bis 7, wobei der Lichtleiter (2) eine Auskoppelstelle aufweist, über welche das Licht wieder aus dem Lichtleiter (2) ausgekoppelt wird, und wobei die Auskoppelstelle des Lichtleiters (2)

   - auf der Seitenkantenfläche (2) der Glasscheibe (1) angeordnet ist oder
   - auf einer Kantenfläche (i) einer Ausnehmung (4) in der Glasscheibe (1) angeordnet ist oder
   - auf der ersten Oberfläche (A) oder der zweiten Oberfläche (B) angeordnet ist.

9. Verglasungselement nach einem der Ansprüche 5 bis 7, wobei die Glasscheibe (1) mit einer lichtstreuenden Struktur (9) versehen ist, die mit dem Lichtleiter (2) in Kontakt steht und geeignet ist, das Licht wieder aus dem Lichtleiter (2) auszukoppeln.

10. Verglasungselement nach einem der Ansprüche 1 bis 9, welches als Einzelglasscheibe ausgebildet ist, wobei die Glasscheibe (1) thermisch vorgespannt ist, und welches bevorzugt eine Fahrzeugverglasung ist.

11. Verglasungselement nach einem der Ansprüche 1 bis 9, welches als Verbundscheibe ausgebildet ist, wobei die Glasscheibe (1) über eine thermoplastische Zwischenschicht (6) mit einer weiteren Scheibe (5) verbunden ist, und welches bevorzugt

    - eine Fahrzeugverglasung ist, besonders bevorzugt eine Fahrzeug-Dachscheibe,
    - ein Bestandteil einer Gebäudeverglasung oder
    - ein Bestandteil einer Verglasung eines elektrischen Geräts, besonders bevorzugt einer Kühlschranktür oder Ofentür, ist.

12. Verglasungselement nach einem der Ansprüche 1 bis 9, welches als Isolierverglasung ausgebildet ist, wobei die Glasscheibe (1) über einen umlaufenden Abstandshalter (7) mit einer weiteren Scheibe (5) verbunden ist, und welches bevorzugt

    - eine Gebäudeverglasung oder
    - eine Verglasung eines elektrischen Geräts, besonders bevorzugt eine Kühlschranktür oder Ofentür, ist.

13. Verwendung eines Verglasungselements nach einem der Ansprüche 1 bis 12, insbesondere nach Anspruch 10 oder 11 in der Ausgestaltung als Fahrzeugverglasung, wobei aus dem Lichtleiter (2) Licht ausgekoppelt wird, welches zur Beleuchtung eines Fahrzeug-Innenraums eingesetzt wird.

14. Verwendung eines Verglasungselements nach einem der Ansprüche 1 bis 12, insbesondere nach Anspruch 11 oder 12 in der Ausgestaltung als Gebäudeverglasung oder als Verglasung eines elektrischen Geräts, wobei aus dem Lichtleiter (2) Licht ausgekoppelt wird, welches zur Darstellung einer Anzeige eingesetzt wird.

15. Verwendung eines Verglasungselements nach einem der Ansprüche 1 bis 12, insbesondere nach Anspruch 11 oder 12 in der Ausgestaltung als Gebäudeverglasung, wobei der Lichtleiter (2) zur Datenübertragung eingesetzt wird, wobei Daten von einer Lichtquelle (3) über den Lichtleiter (2) zu einem Lichtsensor (8) geleitet werden.

X

1

2

e

X'

**Fig. 1**

X - X'

2

1

A

e

B

**Fig. 2**

**Fig. 3**

**Fig. 4**

**Fig. 5**

**Fig. 6**

**Fig. 7**

**Fig. 8**

**Fig. 9**

**Fig. 10**

Europäisches Patentamt
European Patent Office
Office européen des brevets

# EUROPÄISCHER RECHERCHENBERICHT

Nummer der Anmeldung

EP 25 15 4696

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | LAZCANO H. E. ET AL: "Low-repetition rate femtosecond laser writing of optical waveguides in water-white glass slides", APPLIED OPTICS, [Online] Bd. 55, Nr. 12, 15. April 2016 (2016-04-15), Seite 3268, XP093300533, US ISSN: 1559-128X, DOI: 10.1364/AO.55.003268 Gefunden im Internet: URL:https://opg.optica.org/directpdfaccess /9baaee75-ee54-49a6-8ef9576f6df054d6_33904 1/ao-55-12-3268.pdf?da=1&id=339041&seq=0&m obile=no> [gefunden am 2025-07-29] * das ganze Dokument * ----- | 1-15 | INV. C03C3/087 C03C23/00 |
| A | US 2021/405278 A1 (BOTU VENKATESH [US] ET AL) 30. Dezember 2021 (2021-12-30) * Absätze [0005], [0029], [0031], [0033] - [0044], [0067], [0075]; Abbildungen 1-14 * ----- | 1-15 | |
| A | TENG TUN-CHIEN ET AL: "Optical characteristics on practical verification for pico-laser-engraved glass light guide plate with concave microstructures", THE INTERNATIONAL JOURNAL OF ADVANCED MANUFACTURING TECHNOLOGY, SPRINGER, LONDON, Bd. 118, Nr. 9-10, 14. Oktober 2021 (2021-10-14), Seiten 3375-3387, XP037668969, ISSN: 0268-3768, DOI: 10.1007/S00170-021-08179-9 [gefunden am 2021-10-14] * Spalten I - VII; Abbildungen 1,2 * ----- -/-- | 1-15 | |

**RECHERCHIERTE SACHGEBIETE (IPC)**

C03C

Der vorliegende Recherchenbericht wurde für alle Patentansprüche erstellt

| Recherchenort | Abschlußdatum der Recherche | Prüfer |
|---|---|---|
| München | 29. Juli 2025 | Lecerf, Nicolas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
......................................................................
& : Mitglied der gleichen Patentfamilie, übereinstimmendes Dokument

EPO FORM 1503 03.82 (P04C03)

Seite 1 von 2

Europäisches
Patentamt

European
Patent Office

Office européen
des brevets

## EUROPÄISCHER RECHERCHENBERICHT

**Nummer der Anmeldung**

EP 25 15 4696

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2020/399175 A1 (WAGNER ROBERT STEPHEN [US] ET AL) 24. Dezember 2020 (2020-12-24) * Absätze [0007] - [0009], [0034] - [0035], [0051], [0067] - [0069]; Abbildungen 1-5,8 * ----- | 1-15 | |
| A | US 2018/149793 A1 (GOLLIER JACQUES [US] ET AL) 31. Mai 2018 (2018-05-31) * Absätze [0025] - [0039]; Abbildungen 1-7 * ----- | 1-15 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| München | 29. Juli 2025 | Lecerf, Nicolas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

............................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 25 15 4696

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-07-2025

| Im Recherchenbericht angeführtes Patentdokument | Datum der Veröffentlichung | Mitglied(er) der Patentfamilie | Datum der Veröffentlichung |
|---|---|---|---|
| US 2021405278 A1 | 30-12-2021 | EP 3932664 A1 | 05-01-2022 |
| | | US 2021405278 A1 | 30-12-2021 |
| US 2020399175 A1 | 24-12-2020 | CN 109476534 A | 15-03-2019 |
| | | EP 3436415 A1 | 06-02-2019 |
| | | JP 2019516648 A | 20-06-2019 |
| | | KR 20180127432 A | 28-11-2018 |
| | | TW 201802054 A | 16-01-2018 |
| | | US 2020399175 A1 | 24-12-2020 |
| | | WO 2017172685 A1 | 05-10-2017 |
| US 2018149793 A1 | 31-05-2018 | CN 107771169 A | 06-03-2018 |
| | | EP 3297967 A1 | 28-03-2018 |
| | | JP 2018522804 A | 16-08-2018 |
| | | KR 20180008723 A | 24-01-2018 |
| | | TW 201704182 A | 01-02-2017 |
| | | US 2018149793 A1 | 31-05-2018 |
| | | WO 2016187194 A1 | 24-11-2016 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2014060409 A1
- WO 2014167291 A1
- WO 2023169736 A1
- WO 2023237279 A1
- WO 2023144282 A1

**In der Beschreibung aufgeführte Nicht-Patentliteratur**

- **JIAWEI LI et al.** Optical Waveguides Fabricated via Femtosecond Direct Laser Writing: Processes, Materials, and Devices. *Advanced Material Technologies*, 2023, vol. 8
- **RAFAEL R. GATTASS** ; **ERIC MAZUR**. Femtosecond laser micromachining intransparent materials. *Nature Photonics*, 2008, vol. 2
- **GEORGE Y. CHEN et al.** Femtosecond-laser-written Microstructured Waveguides in BK7 Glass. *Scientific Reports*, 2018, vol. 8